(19) Europäisches Patentamt
European Patent Office
Office européen des brevets

(11) Veröffentlichungsnummer: **0 241 429 A2**

(12) # EUROPÄISCHE PATENTANMELDUNG

(21) Anmeldenummer: 87810214.4

(22) Anmeldetag: 06.04.87

(51) Int.Cl.[3]: C 07 F 7/08
A 01 N 55/00

(30) Priorität: 11.04.86 CH 1433/86
27.02.87 CH 754/87

(43) Veröffentlichungstag der Anmeldung: 14.10.87 Patentblatt 87/42

(84) Benannte Vertragsstaaten: AT BE CH DE ES FR GB GR IT LI LU NL SE

(71) Anmelder: CIBA-GEIGY AG
Klybeckstrasse 141
CH-4002 Basel(CH)

(72) Erfinder: Eckhardt, Wolfgang Dr.
Breslauerstrasse 14
D-7850 Lörrach(DE)

(54) **Mikrobizide Silane.**

(57) Neue heterocyclische Organosilyl-Verbingunden der allgemeinen Formel

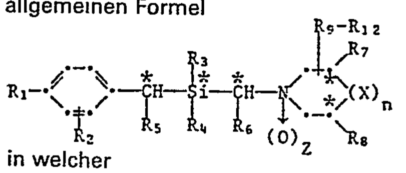

(I)

in welcher
$R_1$ Wasserstoff, $C_1$–$_{10}$–Alkyl, $C_3$–$C_7$–Clycloalkyl, Phenyl oder Trimethylsilyl;
$R_2$ Wasserstoff oder $C_1$–$C_4$–Alkyl bedeuten oder $R_1$ und $R_2$ zusammen einen gesättigten oder ungesättigten Ring mit 6 Kohlenstoffatomen bilden;
$R_3$ und $R_4$ unabhängig voneinander Wasserstoff, $C_1$–$C_4$–Alkyl oder $C_1$–$C_4$–Alkoxy und darüber hinaus $R_4$ $C_3$–$C_7$–Cycloalkyl,
$R_5$ – $R_{12}$ unabhängig voneinander Wasserstoff oder $C_1$–$C_4$–Alkyl darstellen, wobei auch
$R_8$ und $R_9$ zusammen einen gesättigten oder ungesättigten Ring mit 6 Kohlenstoffatomen bilden können,
X fü $CH_2$, Sauerstoff oder Schwefen steht und
n und Z unabhängig voneinander Null oder 1 bedeuten, und schliessen für den Fall, dass Z Null bedeutet, ihre Säure-additionssalze mit ein. Die neuen Wirkstoffe besitzen mokrobizide Eigenschaften und eignen sich insbesondere zur Bekämpfung phytopathogener Mikroorganisem.

EP 0 241 429 A2

0241429



BEZEICHNUNG GEÄNDERT
Siehe Titelseite

CIBA-GEIGY AG
Basel (Schweiz)

5-15832/1+2

# Mikrobizide

Die vorliegende Anmeldung betrifft neue heterocyclische Organosilyl-Verbindungen der nachstehenden Formel I sowie deren Säureadditionssalze. Die Erfindung betrifft ferner die Herstellung dieser Substanzen sowie mikrobizide Mittel, die als Wirkstoff mindestens eine dieser Verbindungen enthalten. Die Erfindung betrifft auch die Verwendung der Wirkstoffe zur Bekämpfung schädlicher Mikroorganismen, insbesondere pflanzenpathogener Fungi.

Die erfindungsgemässen Verbindungen entsprechen der Formel I

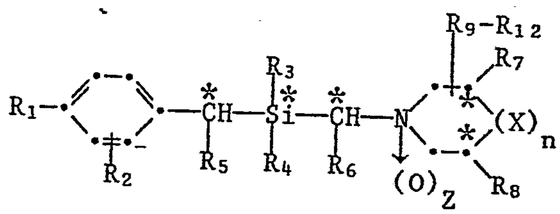

(I)

in welcher

$R_1$ Wasserstoff, $C_1$-$C_{10}$-Alkyl, $C_3$-$C_7$-Cycloalkyl, Phenyl oder Trimethylsilyl und

$R_2$ Wasserstoff oder $C_1$-$C_4$-Alkyl bedeuten oder

$R_1$ und $R_2$ zusammen einen gesättigten oder ungesättigten Ring mit 6 Kohlenstoffatomen bilden;

$R_3$ und $R_4$ unabhängig voneinander Wasserstoff, $C_1$-$C_4$-Alkyl oder $C_1$-$C_4$-Alkoxy und darüber hinaus $R_4$ $C_3$-$C_7$-Cycloalkyl;

$R_5$ - $R_{12}$ unabhängig voneinander Wasserstoff oder $C_1$-$C_4$-Alkyl darstellen, wobei auch

$R_8$ und $R_9$ zusammen einen gesättigten oder ungesättigten Ring mit 6 Kohlenstoffatomen bilden können;

X für $CH_2$, Sauerstoff oder Schwefel steht und
n und Z unabhängig voneinander Null oder 1 bedeuten,
und schliessen für den Fall, dass Z Null bedeutet, ihre Säureadditionssalze mit ein.

Unter dem Begriff Alkyl als selbständiger Substituent oder als Teil eines Substituenten sind je nach Zahl der angegebenen Kohlenstoffatome beispielsweise folgende Gruppen zu verstehen: Methyl, Ethyl, Propyl, Butyl, Pentyl, Hexyl, Heptyl, Octyl, Nonyl oder Decyl sowie ihre Isomeren wie z.B. Isopropyl, Isobutyl, tert.-Butyl, sek.-Butyl oder Isopentyl. $C_3$-$C_7$-Cycloalkyl bedeutet wahlweise Cyclopropyl, Cyclobutyl, Cyclopentyl, Cyclohexyl oder Cycloheptyl. Als Salzbildner mit Verbindungen der Formel I, in denen Z gleich Null ist, kommen alle organischen und anorganischen Säuren in Frage, soweit sie pflanzenphysiologisch verträgliche Salze bilden.

Beispiele salzbildender Säuren sind anorganische Säuren: Halogenwasserstoffsäure wie Fluorwasserstoffsäure, Chlorwasserstoffsäure, Bromwasserstoffsäure oder Jodwasserstoffsäure sowie Schwefelsäure, Phosphorsäure, Phosphorige Säure, Salpetersäure und organische Säuren wie Essigsäure, Trifluoressigsäure, Trichloressigsäure, Propionsäure, Weinsäure, Glykolsäure, Thiocyansäure, Milchsäure, Bernsteinsäure, Zitronensäure, Benzoesäure, Zimtsäure, Oxalsäure, Ameisensäure, Benzolsulfonsäure, p-Toluolsulfonsäure, Methansulfonsäure, Salicylsäure, p-Aminosalicylsäure, 2-Phenoxybenzoesäure oder 2-Acetoxybenzoesäure. Diese Säuren werden nach an sich bekannten Methoden an die betreffenden freien Verbindungen der Formel I addiert.

Die Verbindungen der Formel I sind bei Raumtemperatur stabil. Sie lassen sich auf dem Agrarsektor oder verwandten Gebieten präventiv und kurativ zur Bekämpfung von pflanzenschädigenden Mikroorganismen einsetzen. Die erfindungsgemässen Wirkstoffe der Formel I zeichnen sich in weiten Anwendungskonzentrationen durch eine sehr gute fungizide Wirkung und problemlose Anwendung aus.

Die Verbindungen der Formel I

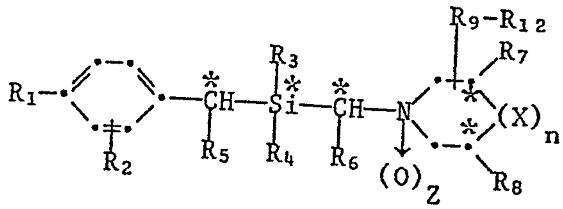

(I)

besitzen mehrere Asymmetrie-Zentren (*), die je nach Substitution ausser den markierten C-Atomen auch das Si-Atom betreffen können. Bedingt durch die chiralen Gruppierungen können die Verbindungen in verschiedenen stereoisomeren Formen anfallen, die enantiomere oder diastereomere Strukturen aufweisen.

Im allgemeinen entsteht bei der Herstellung dieser Verbindungen ein Gemisch von Diastereomeren oder Enantiomeren. Dieses lässt sich auf übliche Weise, z.B. durch fraktionierte Kristallisation von Salzen mit optisch aktiven starken Säuren in die reinen optischen Antipoden aufspalten. Es ist jedoch auch möglich, durch gezielte Synthese reine diastereomere oder enantiomere Formen herzustellen. Die reinen Diastereomeren und Enantiomeren können unterschiedliche biologische Wirkungen aufweisen, so kann z.B. bei der einen Form eine blattfungizide und bei der anderen eine bodenfungizide Wirkung im Vordergrund stehen. Darüber hinaus kann bei gleichem Wirkungsspektrum ein gradueller Aktivitätsunterschied auftreten.

Die vorliegende Erfindung betrifft alle reinen Enantiomeren bzw. Diastereomeren und deren Gemische untereinander.

Einen engeren Umfang der Erfindung bilden Verbindungen der Formel I'

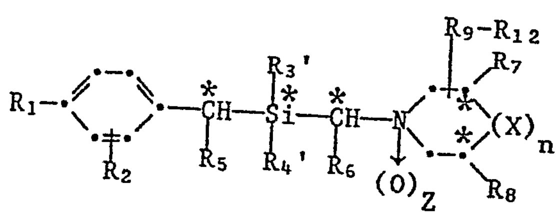

(I')

in welcher
$R_1$ Wasserstoff, $C_1$-$C_{10}$-Alkyl, $C_3$-$C_7$-Cycloalkyl, Phenyl oder Trimethylsilyl und
$R_2$ Wasserstoff oder $C_1$-$C_4$-Alkyl bedeuten oder
$R_1$ und $R_2$ zusammen einen gesättigten oder ungesättigten Ring mit 6 Kohlenstoffatomen bilden;
$R_3'$, $R_4'$ und $R_5$ - $R_{12}$ unabhängig voneinander Wasserstoff oder $C_1$-$C_4$-Alkyl darstellen, wobei auch
$R_8$ und $R_9$ zusammen einen gesättigten oder ungesättigten Ring mit 6 Kohlenstoffatomen bilden können;
X für $CH_2$, Sauerstoff oder Schwefel steht und
n und Z unabhängig voneinander Null oder 1 bedeuten,
und schliessen für den Fall, dass Z Null bedeutet, ihre Säureadditionssalze mit ein.

Aufgrund ihrer ausgeprägten mikrobiziden Wirkung sind folgende Substanzgruppen unter Einschluss ihrer Säureadditionssalze bevorzugt.

Gruppe Ia:
Verbindungen der Formel I', in welchen
$R_1$ $C_1$-$C_4$-Alkyl oder Trimethylsilyl,
$R_2$ Wasserstoff, Methyl oder Ethyl bedeuten, oder
$R_1$ und $R_2$ zusammen einen in 3,4-Stellung ankondensierten Phenylring bilden,
$R_3'$ und $R_4'$ unabhängig voneinander Methyl oder Ethyl,
$R_5$, $R_6$, $R_7$ und $R_8$ unabhängig voneinander Wasserstoff, Methyl oder Ethyl,
$R_9$-$R_{12}$ Wasserstoff darstellen, oder
$R_8$ und $R_9$ zusammen in 3,4-Stellung einen ankondensierten Hexan- oder Phenylring bilden,
X für $CH_2$, Sauerstoff oder Schwefel steht,
n 1 oder Null bedeutet, und
Z Null ist.

Gruppe Ib:

Verbindungen der Formel I', in welchen
$R_1$ iso-Propyl, tert. Butyl oder Trimethylsilyl,
$R_2$ Wasserstoff bedeuten, oder
$R_1$ und $R_2$ zusammen einen in 3,4-Stellung ankondensierten Phenylring bilden,
$R_3$' und $R_4$' Methyl,
$R_5$, $R_6$ und $R_9$-$R_{12}$ Wasserstoff,
$R_7$ und $R_8$ unabhängig voneinander Wasserstoff oder Methyl, oder
$R_8$ und $R_9$ zusammen in 3,4-Stellung einen ankondensierten Hexan- oder Phenylring bilden,
X für $CH_2$, Sauerstoff oder Schwefel steht,
n 1 oder Null bedeutet und
Z Null ist.

Gruppe Ic:

Verbindungen der Formel I', in welchen
$R_1$ iso-Propyl, tert. Butyl oder Trimethylsilyl,
$R_2$ Wasserstoff bedeuten, oder
$R_1$ und $R_2$ zusammen einen in 3,4-Stellung ankondensierten Phenylring bilden,
$R_3$' und $R_4$' unabhängig voneinander Methyl,
$R_5$, $R_6$ und $R_9$-$R_{12}$ Wasserstoff,
$R_7$ und $R_8$ unabhängig voneinander Wasserstoff oder Methyl, oder
$R_8$ und $R_9$ zusammen in 3,4-Stellung einen ankondensierten Hexan- oder Phenylring bilden,
X für $CH_2$, Sauerstoff oder Schwefel steht,
n 1 bedeutet, und
Z Null ist.

Gruppe Id:

Verbindungen der Formel I, in welchen
$R_1$ $C_1$-$C_4$-Alkyl oder Trimethylsilyl,
$R_2$ Wasserstoff, Methyl oder Ethyl bedeuten, oder
$R_1$ und $R_2$ zusammen einen in 3,4-Stellung ankondensierten Phenylring bilden,

$R_3$ und $R_4$ unabhängig voneinander Wasserstoff, Methyl, Ethyl, Methoxy oder Cyclohexyl,
$R_5$, $R_6$, $R_7$ und $R_8$ unabhängig voneinander Wasserstoff, Methyl oder Ethyl,
$R_9$-$R_{12}$ Wasserstoff darstellen, oder
$R_8$ und $R_9$ zusammen in 3,4-Stellung einen ankondensierten Hexan- oder Phenylring bilden,
X für $CH_2$, Sauerstoff oder Schwefel steht,
n 1 oder Null bedeutet, und
Z Null ist.

Bevorzugte Einzelverbindungen sind:

Gruppe A:
Dimethyl-4-tert.butylbenzyl-2,6-dimethylmorpholin-(4)ylmethyl-silan (Verb. 1.1);
Dimethyl-4-tert.butylbenzyl-morpholin-(4)ylmethyl-silan (Verb. 1.5);
Dimethyl-4-tert.butylbenzyl-N-piperidinylmethylsilan (Verb. 1.6);
Dimethyl-4-trimethylsilylbenzyl-N-piperidinylmethyl-silan (Verb. 1.15);
Dimethyl-4-trimethylsilylbenzyl-morpholin-(4)ylmethyl-silan (Verb. 1.16);
Dimethyl-4-trimethylsilylbenzyl-2,6-dimethylmorpholin-(4)ylmethyl-silan (Verb. 1.17);
Dimethyl-4-tert.butylbenzyl-tetrahydro-1,4-thiazin-(4)ylmethylsilan (Verb. 1.28);
Dimethyl-4-isopropylbenzyl-tetrahydro-1,4-thiazin-(4)ylmethyl-silan (Verb. 1.29);
Dimethyl-4-tert.butylbenzyl-N-pyrrolidinylmethyl-silan (Verb. 1.30);
Dimethyl-4-trimethylsilylbenzyl-tetrahydro-1,4-thiazin-(4)ylmethyl-silan (Verb. 1.33);
Dimethyl-4-tert.butylbenzyl-cyclohexa[c]piperidin-(1)ylmethyl-silan (Verb. 2.4);
Dimethyl-4-tert.butylbenzyl-benzo[c]-piperidin-(1)ylmethyl-silan (Verb. 2.5);

Dimethyl-4-trimethylsilylbenzyl-cyclohexa[c]piperidin-(1)ylmethyl-silan (Verb. 2.14);
Dimethyl-naphthyl-(2)ylmethyl-2,6-dimethylmorpholin-(4)ylmethyl-silan (Verb. 3.1);
Dimethyl-naphthyl-(2)ylmethyl-cyclohexa[c]piperidin-(1)ylmethyl-silan (Verb. 3.8):

Gruppe B:

cis-Dimethyl-4-tert.butylbenzyl-2,6-dimethylmorpholin-4-ylmethyl-silan (Verb. 1.37);
cis-Cyclohexyl-4-tert.butylbenzyl-2,6-dimethylmorpholin-4-ylmethyl-silan (Verb. 1.44);
cis-Methoxy-cyclohexyl-(4-tert.butylbenzyl)-2,6-dimethylmorpholin-4)yl-silan (Verb. 1.46).

Die neuen Verbindungen der Formel I werden hergestellt, indem man
1) in einem mehrstufigen Verfahren
a) eine Verbindung der Formel II

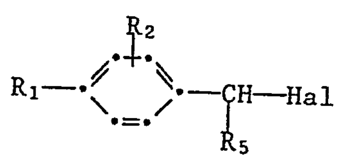

(II),

mit einem Erdalkalimetall, vorzugsweise Magnesium, reagieren lässt und die so erhaltene Organometall-Verbindung der Formel III

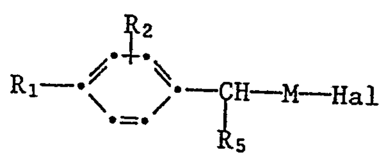

(III),

b) mit einer Halogensilanverbindung der Formel IV

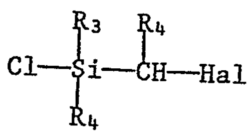

(IV)

umsetzt und die so erhaltene Verbindung V

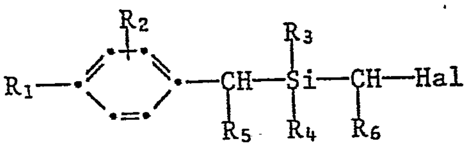

(V)

c) mit einem heterocyclischen Amin der Formel VI

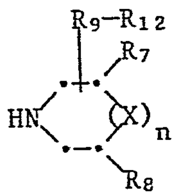

(VI),

gegebenenfalls in Gegenwart einer Hilfsbase, zu einer Verbindung der Formel Ia

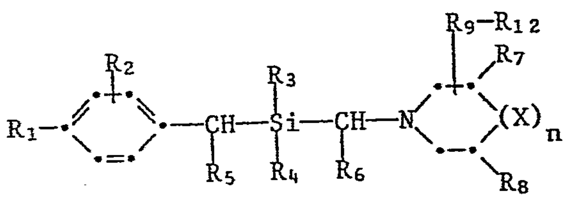

(Ia),

reagieren lässt und diese Verbindung, falls gewünscht,

d) durch Oxidation mit einem Oxidationsmittel, wie z.B. $H_2O_2$ oder Persäuren, in die Verbindung Ib

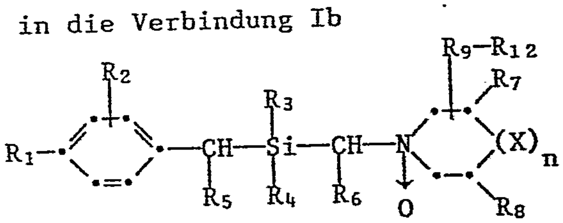

(Ib),

überführt;

oder

2) eine Organometall-Verbindung der Formel VII

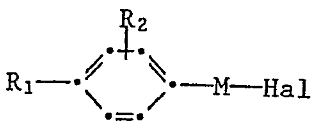

(VII)

mit einer Si-organischen Verbindung der Formel VIII

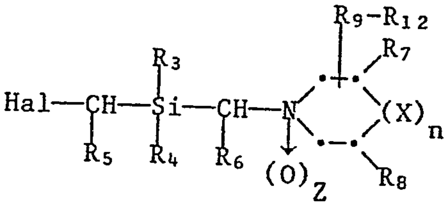

(VIII),

umsetzt.

In den vorstehenden Formeln II - VIII haben die Reste $R_1$-$R_{12}$, sowie die Symbole n und Z die für Formel I angegebenen Bedeutungen, M steht für ein Erdalkalimetallatom, vorzugsweise Magnesium, und Hal bedeutet Halogen, vorzugsweise Chlor, Brom oder Jod.

Die Reaktionstemperaturen im Verfahren (1) sind in der Stufe (1a) -80° bis 80°C, bevorzugt -20° bis 80°C, in der Stufe (1b) -20° bis 100°C, bevorzugt 0° bis 40°C, in der Stufe (1c) 0° bis 180°C, bevorzugt 20 - 150°C, und in der Stufe (1d) 0° bis 100°C, bevorzugt 0 bis 50°C. Im Verfahren (2) liegen die Umsetzungstemperaturen bei -20° bis 80°C, vorzugsweise bei 0 bis 60°C.

Die Verfahrensstufen (1a) und (1b) können zweckmässigerweise im Eintopfverfahren durchgeführt werden, so dass sich die Isolierung und Reinigung des Produktes der Formel V erübrigt.

Die in der Verfahrensstufe (1c) anwendbaren Hilfsbasen dienen als Säureakzeptoren. Zu diesem Zweck können alle üblichen Säurebindemittel, wie tertiäre Amine, sowie Alkali- und Erdalkaliverbindungen verwendet werden. Beispielhaft seien dafür erwähnt die Hydroxide, Oxide und Karbonate des Lithiums, Natriums, Kaliums, Magnesiums, Calciums und Bariums, ferner weitere basische Verbindungen wie Trimethylamin, Triethylamin, Tripropylamin, Tributylamin, Tribenzylamin, Tricyclohexylamin, Triamylamin, Trihexylamin, N,N-Dimethylanilin, N,N-Dimethyltoluidin, N,N-Dimethyl-p-amino-pyridin, N-Methylpyrrolidin, N-Methyl-piperidin, N-Methyl-pyrrolidin, N-Methylimidazol, N-Methyl-pyrrol, N-Methylmorpholin, N-Methylhexamethylenimin, Pyridin, Chinolin, alpha-Picolin, β-Picolin, Isochinolin, Pyrimidin, Acridin, N,N,N',N'-Tetra-methylethylendiamin, N,N,N',N'-Tetraethylethylendiamin, Chinoxalin, N-Propyldiisopropylamin, N,N-Dimethylcyclohexylamin, 2,6-Lutidin, 2,4-Lutidin, Triethylendiamin.
Zweckmässigerweise verwendet man den Säureakzeptor in einem Ueber- oder Unterschuss von bis zu 20 %, bezogen auf den Ausgangsstoff.

In den erfindungsgemässen Verfahren verwendet man in Anpassung an die jeweiligen Reaktionsbedingungen inerte Lösungs- und Verdünnungsmittel. Als Beispiele sind zu nennen:
Halogenkohlenwasserstoffe, insbesondere Chlorkohlenwasserstoffe, wie Tetrachlorethylen, Tetrachlorethan, Dichlorpropan, Methylenchlorid, Dichlorbutan, Chloroform, Chlornaphthalin, Dichlornaphthalin, Tetrachlorkohlenstoff, Trichlorethan, Trichlorethylen, Pentachlorethan, Difluorbenzol, 1,2-Dichlorethan, 1,1-Dichlorethan, 1,2-cis-Dichlorethylen, Chlorbenzol, Fluorbenzol, Brombenzol, Jodbenzol, Dichlorbenzol, Dibrombenzol, Chlortoluol, Trichlorbenzol; Ether, wie Ethylpropylether, Methyl-tert.-butylether, n-Butylethylether, Di-n-butylether, Di-isobutylether, Diisoamylether, Diisopropylether, Anisol, Phenetol, Cyclohexylmethylether, Diethylether, Ethylenglykoldimethylether, Tetrahydrofuran, Dioxan, Thioanisol, Dichlordiethylether; Nitrokohlenwasserstoffe wie Nitromethan, Nitroethan, Nitrobenzol, Chlornitrobenzol, o-Nitrotoluol; Nitrile wie Acetonitril, Butyronitril, Isobutyronitril, Benzonitril, m-Chlorbenzonitril; aliphatische oder cycloaliphatische Kohlenwasserstoffe, wie Heptan, Pinan, Nonan, Cymol, Benzinfraktionen innerhalb eines Siedepunktintervalles von 70 bis 190°C, Cyclohexan, Methylcyclohexan, Dekalin, Petrolether, Hexan, Ligroin, Trimethylpentan, Trimethylpentan, 2,3,3-Trimethylpentan, Octan; Ester wie Ethylacetat, Acetessigester, Isobutylacetat; Amide, z.B. Formamid, Methylformamid, Dimethylformamid;

Ketone, wie Aceton, Methylethylketon, gegebenenfalls auch Wasser. Auch Gemische der genannten Lösungs- und Verdünnungsmittel kommen in Betracht.

Die Salze der Verbindungen der Formel I mit Z gleich Null erhält man durch Zusammengeben der freien Amine mit den betreffenden Säuren, gegebenenfalls in einem inerten Lösungsmittel, anschliessender Entfernung des Lösungsmittels durch Destillation und gegebenenfalls Umkristallisation des gebildeten Rückstandes.

Verfahren zur Herstellung von heterocyclischen Organosilyl-Verbindungen mit fungizider Wirksamkeit sind in der DE-OS 32 15 409 und in der Europäischen Patentanmeldung 148 026 beschrieben. Die fungizide Aktivität dieser Verbindungen hat sich jedoch nicht immer als vollständig zufriedenstellend, insbesondere beim Einsatz geringer Konzentrationen, erwiesen.

Es wurde überraschend festgestellt, dass Verbindungen der Formel I ein für praktische Bedürfnisse sehr günstiges Mikrobizidspektrum gegen Pilze und Bakterien, insbesondere gegen phytopathogene Pilze und Bakterien, aufweisen. Sie besitzen sehr vorteilhafte kurative, systemische und insbesondere präventive Eigenschaften und lassen sich zum Schutz von zahlreichen Kulturpflanzen einsetzen. Mit den Wirkstoffen der Formel I können an Pflanzen oder an Pflanzenteilen (Früchte, Blüten, Laubwerk, Stengel, Knollen, Wurzeln) von unterschiedlichen Nutzkulturen die auftretenden Schädlinge eingedämmt oder vernichtet werden, wobei auch später zuwachsende Pflanzenteile vor phytopathogenen Mikroorganismen, wie z.B. Pilze, verschont bleiben.

Als Mikrobizide sind die Wirkstoffe der Formel I z.B. gegen die den folgenden Klassen angehörenden phytopathogenen Pilze wirksam: Fungi imperfecti (z.B. Botrytis, Helminthosporium, Fusarium, Septoria, Cercospora und Alternaria); Basidiomyceten (z.B. die Gattungen Hemileia, Rhizocotonia, Puccinia); insbesondere wirken sie gegen die Klasse der Ascomyceten (z.B. Venturia, Podosphaera, Erysiphe,

Monilinia, Uncinula). Ueberdies wirken die Verbindungen der Formel I systemisch. Sie können ferner als Beizmittel zur Behandlung von Saatgut (Früchte, Knollen, Körner) und Pflanzenstecklingen zum Schutz von Pilzinfektionen sowie gegen im Erdboden auftretende phytopathogene Pilze eingesetzt werden.

Die Erfindung betrifft somit auch Schädlingsbekämpfungsmittel, insbesondere mikrobizide Mittel, sowie deren Verwendung auf dem Agrarsektor oder verwandten Gebieten.

Darüber hinaus schliesst die vorliegende Erfindung auch die Herstellung dieser Mittel ein, die gekennzeichnet ist durch das innige Vermischen der Aktivsubstanz mit einem oder mehreren hierin beschriebenen Substanzen bzw. Substanzgruppen. Eingeschlossen ist auch ein Verfahren zur Behandlung von Pflanzen, das sich durch Applikation der Verbindungen der Formel I bzw. der neuen Mittel auszeichnet.

Als Zielkulturen für den hierin offenbarten mikrobiziden Einsatz gelten im Rahmen dieser Erfindung beispielsweise folgende Pflanzenarten: Getreide (Weizen, Gerste, Roggen, Hafer, Reis, Sorghum und Verwandte); Rüben (Zucker- und Futterrüben); Kern-, Stein- und Beerenobst (Aepfel, Birnen, Pflaumen, Pfirsiche, Mandeln, Kirschen, Erd-, Him- und Brombeeren); Hülsenfrüchte (Bohnen, Linsen, Erbsen, Soja); Oelkulturen (Raps, Senf, Mohn, Oliven, Sonnenblumen, Kokos, Rizinus, Kakao, Erdnüsse); Gurkengewächse (Kürbis, Gurken, Melonen); Fasergewächse: (Baumwolle, Flachs, Hanf, Jute); Citrusfrüchte (Orangen, Zitronen, Pampelmusen, Mandarinen); Gemüsesorten (Spinat, Kopfsalat, Spargel, Kohlarten, Möhren, Zwiebeln, Tomaten, Kartoffeln, Paprika); Lorbeergewächse (Avocado, Cinnamonium, Kampfer) und weitere Pflanzen wie Mais, Tabak, Nüsse, Kaffee, Zuckerrohr, Tee, Weinreben, Hopfen, Bananen- und Naturkautschukgewächse sowie Zierpflanzen (Compositen).

Wirkstoffe der Formel I werden üblicherweise in Form von Zusammensetzungen verwendet und können gleichzeitig oder nacheinander mit weiteren Wirkstoffen auf die zu behandelnde Fläche oder Pflanze gegeben werden. Diese zusätzlichen Wirkstoffe können sowohl Düngemittel, Spurenelemente-Vermittler oder andere das Pflanzenwachstum beeinflussende Präparate sein. Es können aber auch selektive Herbizide, Insektizide, Fungizide, Bakterizide, Nematizide, Molluskizide oder Gemische mehrerer dieser Präparate sein, zusammen mit gegebenenfalls weiteren in der Formulierungstechnik üblichen Trägerstoffen, Tensiden oder anderen applikationsfördernden Zusätzen.

Geeignete Träger und Zusätze können fest oder flüssig sein und entsprechen den in der Formulierungstechnik zweckdienlichen Stoffen, wie z.B. natürlichen oder regenerierten mineralischen Stoffen, Lösungs-, Dispergier-, Netz-, Haft-, Verdickungs-, Binde- oder Düngemitteln.

Ein bevorzugtes Verfahren zum Aufbringen eines Wirkstoffes der Formel I bzw. eines agrochemischen Mittels, das mindestens einen dieser Wirkstoffe enthält, ist das Aufbringen auf das Blattwerk (Blattapplikation). Anzahl der Applikationen und die Aufwandmenge richten sich dabei nach dem Befallsdruck für den entsprechenden Erreger (Pilzsorte). Die Wirkstoffe der Formel I können aber auch über den Erdboden durch das Wurzelwerk in die Pflanze gelangen (systemische Wirkung), indem man den Standort der Pflanze mit einer flüssigen Zubereitung tränkt oder die Substanzen in fester Form in den Boden einbringt, z.B. in Form von Granulat (Bodenapplikation). Die Verbindungen der Formel I können aber auch auf Samenkörner aufgebracht werden (Coating), indem man die Körner entweder mit einer flüssigen Zubereitung des Wirkstoffs tränkt oder sie mit einer festen Zubereitung beschichtet. Darüber hinaus sind in besonderen Fällen weitere Applikationsarten möglich, so z.B. die gezielte Behandlung der Pflanzenstengel oder der Knospen.

Die Verbindungen der Formel I werden in unveränderter Form oder vorzugsweise zusammen mit den in der Formulierungstechnik üblichen Hilfsmitteln eingesetzt. Sie werden dabei z.B. zu Emulsionskonzentraten, streichfähigen Pasten, direkt versprühbaren oder verdünnbaren Lösungen, verdünnten Emulsionen, Spritzpulvern, löslichen Pulvern, Stäubemitteln, Granulaten, durch Verkapselungen in z.B. polymeren Stoffen in bekannter Weise verarbeitet. Die Anwendungsverfahren wie Versprühen, Vernebeln, Verstäuben, Verstreuen, Bestreichen oder Giessen werden gleich wie die Art der Mittel den angestrebten Zielen und den gegebenen Verhältnissen entsprechend gewählt. Günstige Aufwandmengen liegen im allgemeinen bei 50 g bis 5 kg Aktivsubstanz (AS) je ha; bevorzugt 100 g bis 2 kg AS/ha, insbesondere bei 200 g bis 600 g AS/ha.

Die Formulierungen, d.h. die den Wirkstoff der Formel I und gegebenenfalls einen festen oder flüssigen Zusatzstoff enthaltenden Mittel, Zubereitungen oder Zusammensetzungen werden in bekannter Weise hergestellt, z.B. durch inniges Vermischen und/oder Vermahlen der Wirkstoffe mit Streckmitteln, wie z.B. mit Lösungsmitteln, festen Trägerstoffen, und gegebenenfalls oberflächenaktiven Verbindungen (Tensiden).

Als Lösungsmittel können in Frage kommen: Aromatische Kohlenwasserstoffe, bevorzugt die Fraktionen $C_8$ bis $C_{12}$, wie z.B. Xylolgemische oder substituierte Naphthaline, Phthalsäureester wie Dibutyl- oder Dioctylphthalat, aliphatische Kohlenwasserstoffe wie Cyclohexan oder Paraffine, Alkohole und Glykole sowie deren Ether und Ester, wie Ethanol, Ethylenglykol, Ethylenglykolmonomethyl- oder Ethylether, Ketone wie Cyclohexanon, stark polare Lösungsmittel wie N-Methyl-2-pyrrolidon, Dimethylsulfoxid oder Dimethylformamid, sowie gegebenenfalls epoxydierte Pflanzenöle wie epoxydiertes Kokosnussöl oder Sojaöl; oder Wasser.

Als feste Trägerstoffe, z.B. für Stäubemittel und dispergierbare Pulver, werden in der Regel natürliche Gesteinsmehle verwendet, wie Calcit, Talkum, Kaolin, Montmorillonit oder Attapulgit. Zur Verbesserung der physikalischen Eigenschaften können auch hochdisperse Kieselsäure oder hochdisperse saugfähige Polymerisate zugesetzt werden. Als gekörnte, adsorptive Granulatträger kommen poröse Typen wie z.B. Bimsstein, Ziegelbruch, Sepiolit oder Bentonit sowie, als nichtsorptive Trägermaterialien z.B. Calcit oder Sand in Frage. Darüberhinaus kann eine Vielzahl von vorgranulierten Materialien anorganischer oder organischer Natur, wie insbesondere Dolomit oder zerkleinerte Pflanzenrückstände, verwendet werden. Besonders vorteilhafte, applikationsfördernde Zuschlagstoffe, die zu einer starken Reduktion der Aufwandmenge führen können, sind ferner natürliche (tierische oder pflanzliche) oder synthetische Phospholipide aus der Reihe der Kephaline und Lecithine, die man beispielsweise aus Sojabohnen gewinnen kann.

Als oberflächenaktive Verbindungen kommen je nach Art des zu formulierenden Wirkstoffes der Formel I nichtionogene, kation- und/oder anionaktive Tenside mit guten Emulgier-, Dispergier- und Netzeigenschaften in Betracht. Unter Tensiden sind auch Tensidgemische zu verstehen.

Geeignete anionische Tenside können sowohl sog. wasserlösliche Seifen als auch wasserlösliche synthetische oberflächenaktive Verbindungen sein.

Als Seifen seien die Alkali-, Erdalkali- oder gegebenenfalls substituierten Ammoniumsalze von höheren Fettsäuren ($C_{10}$-$C_{22}$), wie z.B. die Na- oder K-Salze der Oel- oder Stearinsäure, oder von natürlichen Fettsäuregemischen, die z.B. aus Kokosnuss- oder Talgöl gewonnen werden können, genannt. Ferner sind auch die Fettsäure-Methyllaurinsalze zu erwähnen.

Häufiger werden jedoch sog. synthetische Tenside verwendet, insbesondere Alkansulfonate, Fettalkoholsulfate, sulfonierte Benzimidazolderivate oder Alkylsulfonate.

Die Fettalkoholsulfonate oder -sulfate liegen in der Regel als Alkali-, Erdalkali- oder gegebenenfalls substituierte Ammoniumsalze vor und weisen einen Alkylrest mit 8 bis 22 C-Atomen auf, wobei Alkyl auch den Alkylteil von Acylresten einschliesst, z.B. das Na- oder Ca-Salz der Ligninsulfonsäure, des Dodecylschwefelsäureesters oder eines aus natürlichen Fettsäuren hergestellten Fettalkoholsulfatgemisches. Hierher gehören auch die Salze der Schwefelsäureester und Sulfonsäuren von Fettalkohol-Ethylenoxyd-Addukten. Die sulfonierten Benzimidazolderivate enthalten vorzugsweise 2-Sulfonsäuregruppen und einen Fettsäurerest mit 8-22 C-Atomen. Alkylarylsulfonate sind z.B. die Na-, Ca- oder Triethanolaminsalze der Dodecylbenzolsulfonsäure, der Dibutylnaphthalinsulfonsäure, oder eines Naphthalinsulfonsäure-Formaldehydkondensationsproduktes.

Ferner kommen auch entsprechende Phosphate wie z.B. Salze des Phosphorsäureesters eines p-Nonylphenol-(4-14)-Ethylenoxyd-Adduktes in Frage.

Als nichtionische Tenside kommen in erster Linie Polyglykoletherderivate von aliphatischen oder cycloaliphatischen Alkoholen, gesättigten oder ungesättigten Fettsäuren und Alkylphenolen in Betracht, die 3 bis 30 Glykolethergruppen und 8 bis 20 Kohlenstoffatome im (aliphatischen) Kohlenwasserstoffrest und 6 bis 18 Kohlenstoffatome im Alkylrest der Alkylphenole enthalten können.

Weitere geeignete nichtionische Tenside sind die wasserlöslichen, 20 bis 250 Aethylenglykoläthergruppen und 10 bis 100 Propylenglykolethergruppen enthaltenden Polyethylenoxidaddukte an Polypropylenglykol, Aethylendiaminopolypropylenglykol und Alkylpolypropylenglykol mit 1 bis 10 Kohlenstoffatomen in der Alkylkette. Die genannten Verbindungen enthalten üblicherweise pro Propylenglykol-Einheiten 1 bis 5 Ethylenglykoleinheiten.

Als Beispiele nichtionischer Tenside seien Nonylphenolpolyethoxyethanole, Ricinusölpolyglykolether, Polypropylen-Polyethylenoxydaddukte, Tributylphenoxypolyethylenethanol, Polyethylenglykol und Octylphenoxypolyethoxyethanol erwähnt.

Ferner kommen auch Fettsäureester von Polyoxyethylensorbitan wie das Polyoxyethylensorbitan-trioleat in Betracht.

Bei den kationischen Tensiden handelt es sich vor allem um quartäre Ammoniumsalze, welche als N-Substituenten mindestens einen Alkylrest mit 8 bis 22 C-Atomen enthalten und als weitere Substituenten niedrige, gegebenenfalls halogenierte Alkyl-, Benzyl- oder niedrige Hydroxyalkylreste aufweisen. Die Salze liegen vorzugsweise als Halogenide, Methylsulfate oder Ethylsulfate vor, z.B. das Stearyltrimethylammoniumchlorid oder das Benzyldi(2-chlorethyl)ethylammoniumbromid.

Weitere in der Formulierungstechnik gebräuchlichen Tenside sind dem Fachmann bekannt oder können der einschlägigen Fachliteratur entnommen werden.

Die agrochemischen Zubereitungen enthalten in der Regel 0,1 bis 99 Gew.-%, insbesondere 0,1 bis 95 Gew.-% Wirkstoff der Formel I, 99,9 bis 1 Gew.-%, insbesondere 99,8 bis 5 Gew.-% eines festen oder flüssigen Zusatzstoffes und 0 bis 25 Gew.-%, insbesondere 0,1 bis 25 Gew.-%, eines Tensides.

Während als Handelsware eher konzentrierte Mittel bevorzugt werden, verwendet der Endverbraucher in der Regel verdünnte Mittel.

Die Mittel können auch weitere Zusätze wie Stabilisatoren, Entschäumer, Viskositätsregulatoren, Bindemittel, Haftmittel sowie Dünger oder andere Wirkstoffe zur Erzielung spezieller Effekte enthalten.

Agrochemische Mittel, die Verbindungen der Formel I als Aktivkomponente enthalten, stellen ebenfalls einen Bestandteil der vorliegenden Erfindung dar.

Die nachfolgenden Beispiele dienen zur nähreren Erläuterung der Erfindung, ohne dieselbe einzuschränken.

1. Herstellungsbeispiele

Beispiel 1.1: Herstellung von

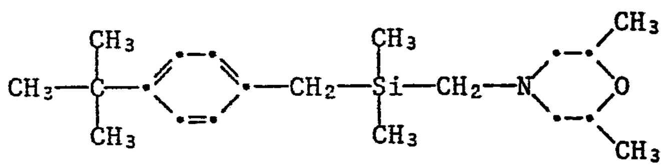

Dimethyl-4-tert.butylbenzyl-2,6-dimethylmorpholin-(4)ylmethyl-silan

7,6 g (0,03 M) von Dimethyl-4-tert.butylbenzyl-chlormethyl-silan werden zusammen mit 20 ml 2,6-Dimethylmorpholin über Nacht bei 150°C gerührt. Nach dem Abkühlen wird das Reaktionsgemisch in 100 ml Methylenchlorid gelöst und 3 mal mit Wasser und 1 mal mit gesättigter Kaliumcarbonatlösung gewaschen. Nach dem Trocknen über Natriumsulfat, Filtrieren und Einengen wird das Rohprodukt am Hochvacuum destilliert. Man erhält 2,7 g der Titelverbindung mit einem Sdp. 100 - 102°C/1,3 Pa.

Herstellung des Zwischenproduktes

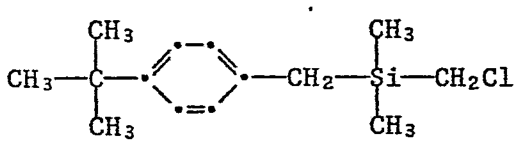

Dimethyl-4-tert.butylbenzyl-chlormethyl-silan

1,2 g (0,05 Mol) Magnesiumspäne werden in 20 ml Diethylether vorgelegt und mit ca. 1 ml 4-tert.Butylbenzylchlorid versetzt. Danach wird zum Sieden erhitzt und es werden einige Jodkristalle

zugesetzt. Nach dem Einsetzen der Reaktion wird die restliche Menge 4-tert-Butylbenzylchlorid (total 10 g [0,055 M] in 80 ml Diethylether) so zugetropft, dass die Temperatur bei 25 - 30°C gehalten wird. Das Reaktionsgemisch wird 2 Stunden bei Zimmertempertur weitergerührt. Dann werden 7,2 g (0,05 M) Chlormethyldimethylchlorsilan in 20 ml Diethylether bei Raumtemperatur zugetropft und über Nacht bei Raumtemperatur weitergerührt. Nun wird das Reaktionsgemisch unter Eiskühlung mit 100 ml einer gesättigten Ammoniumchloridlösung versetzt, die organische Phase abgetrennt, mit Essigsäureethylester verdünnt und 3 mal mit Wasser gewaschen. Das nach dem Trocknen über Natriumsulfat, Filtrieren und Einengen am Wasserstrahlvakuum erhaltene rohe Zwischenprodukt wird auf 0°C abgekühlt und filtriert. Man erhält 11,2 g (88 % d.T.) des gewünschten Zwischenproduktes als Filtrat. Zur weiteren Reinigung kann das Produkt am Wasserstrahlvakuum destilliert werden
(Sdp. 149 - 150°C/2000 Pa).

Wie im vorstehende Beispiel beschrieben oder nach einer der dargestellten Methoden zur Synthese der Verbindungen der Formel I lassen sich folgende Verbindungen herstellen:

Tabelle 1

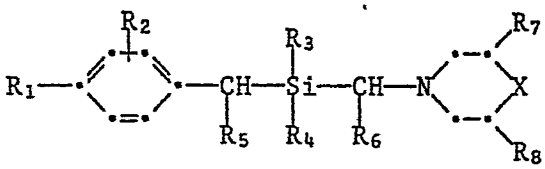

| Nr. | $R_1$ | $R_2$ | $R_3$ | $R_4$ | $R_5$ | $R_6$ | $R_7$ | $R_8$ | X | Physik. Daten |
|---|---|---|---|---|---|---|---|---|---|---|
| 1.1 | $C_4H_9(t)$ | H | $CH_3$ | $CH_3$ | H | H | $CH_3$ | $CH_3$ | O | Sdp.100-102°C (1,3 Pa) |
| 1.2 | $C_4H_9(t)$ | H | $C_2H_5$ | $C_2H_5$ | H | H | $CH_3$ | $CH_3$ | O | |
| 1.3 | $C_4H_9(t)$ | H | $CH_3$ | $CH_3$ | $CH_3$ | H | $CH_3$ | $CH_3$ | O | |
| 1.4 | $C_4H_9(t)$ | H | $CH_3$ | $CH_3$ | H | $CH_3$ | $CH_3$ | $CH_3$ | O | |
| 1.5 | $C_4H_9(t)$ | H | $CH_3$ | $CH_3$ | H | H | H | H | O | Sdp.107-108°C (4,0 Pa) |
| 1.6 | $C_4H_9(t)$ | H | $CH_3$ | $CH_3$ | H | H | H | H | $CH_2$ | Sdp. 92-95°C (0,7 Pa) |
| 1.7 | $C_4H_9(t)$ | H | $C_2H_5$ | $C_2H_5$ | H | H | H | H | $CH_2$ | |
| 1.8 | $CH_3$ | $CH_3$ | $CH_3$ | $CH_3$ | H | H | $CH_3$ | $CH_3$ | O | |
| 1.9 | $C_3H_7(i)$ | H | $CH_3$ | $CH_3$ | H | H | $CH_3$ | $CH_3$ | O | |
| 1.10 | $C_3H_7(i)$ | H | $CH_3$ | $CH_3$ | H | H | H | H | O | |
| 1.11 | $C_3H_7(i)$ | H | $CH_3$ | $CH_3$ | H | H | H | H | $CH_2$ | |
| 1.12 | $C_3H_7(i)$ | H | $CH_3$ | $CH_3$ | $CH_3$ | H | $CH_3$ | $CH_3$ | O | |
| 1.13 | $C_2H_5$ | H | $CH_3$ | $CH_3$ | H | H | $CH_3$ | $CH_3$ | O | |
| 1.14 | $C_2H_5$ | H | $CH_3$ | $CH_3$ | H | H | H | H | $CH_2$ | |
| 1.15 | $(CH_3)_3Si-$ | H | $CH_3$ | $CH_3$ | H | H | H | H | $CH_2$ | Sdp. 96-98°C (1,3 Pa) |
| 1.16 | $(CH_3)_3Si-$ | H | $CH_3$ | $CH_3$ | H | H | H | H | O | Sdp.104-108°C (2,6 Pa) |
| 1.17 | $(CH_3)_3Si-$ | H | $CH_3$ | $CH_3$ | H | H | $CH_3$ | $CH_3$ | O | Sdp.100-102°C (2,6 Pa) |
| 1.18 | $(CH_3)_3Si-$ | H | $C_2H_5$ | $C_2H_5$ | H | H | $CH_3$ | $CH_3$ | O | |
| 1.19 | $(CH_3)_3Si-$ | H | $CH_3$ | $CH_3$ | $CH_3$ | H | $CH_3$ | $CH_3$ | O | |
| 1.20 | $C_4H_9(t)$ | H | $CH_3$ | $CH_3$ | $CH_3$ | $CH_3$ | $CH_3$ | $CH_3$ | O | |
| 1.21 | $C_3H_7(i)$ | H | $CH_3$ | $CH_3$ | $CH_3$ | $CH_3$ | $CH_3$ | $CH_3$ | O | |
| 1.22 | $C_3H_7(i)$ | H | $CH_3$ | $CH_3$ | $CH_3$ | $CH_3$ | H | H | $CH_2$ | |
| 1.23 | $C_4H_9(t)$ | H | $CH_3$ | $CH_3$ | $CH_3$ | $CH_3$ | H | H | $CH_2$ | |
| 1.24 | 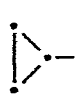 | H | $CH_3$ | $CH_3$ | H | H | $CH_3$ | $CH_3$ | O | |

Fortsetzung Tabelle 1

| Nr. | $R_1$ | $R_2$ | $R_3$ | $R_4$ | $R_5$ | $R_6$ | $R_7$ | $R_8$ | X | Physik. Daten |
|---|---|---|---|---|---|---|---|---|---|---|
| 1.25 | 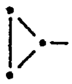 | H | $CH_3$ | $CH_3$ | H | H | H | H | $CH_2$ | |
| 1.26 | 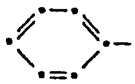 | H | $CH_3$ | $CH_3$ | H | H | $CH_3$ | $CH_3$ | O | |
| 1.27 | 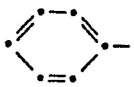 | H | $CH_3$ | $CH_3$ | H | H | H | H | $CH_2$ | |
| 1.28 | $C_4H_9$(t) | H | $CH_3$ | $CH_3$ | H | H | H | H | S | Sdp.127-130°C (1,3 Pa) |
| 1.29 | $C_3H_7$(i) | H | $CH_3$ | $CH_3$ | H | H | H | H | S | |
| 1.30 | $C_4H_9$(t) | H | $CH_3$ | $CH_3$ | H | H | H | H | - | Sdp. 88-90°C (2,7 Pa) |
| 1.31 | $C_3H_7$(i) | H | $CH_3$ | $CH_3$ | H | H | H | H | - | |
| 1.32 | $(CH_3)_3Si$ | H | $CH_3$ | $CH_3$ | H | H | H | H | - | |
| 1.33 | $(CH_3)_3Si$ | H | $CH_3$ | $CH_3$ | H | H | H | H | S | Sdp.120-128°C (3,0 Pa) |
| 1.34 | $C_4H_9$(t) | H | $C_2H_5$ | $C_2H_5$ | H | H | H | H | S | |
| 1.35 | $C_4H_9$(t) | H | $C_2H_5$ | $C_2H_5$ | H | H | H | H | O | |
| 1.36 | $C_4H_9$(t) | H | $C_2H_5$ | $C_2H_5$ | H | H | H | H | - | |
| 1.37 | $C_4H_9$(t) | H | $CH_3$ | $CH_3$ | H | H | $CH_3$* | $CH_3$* | O | Sdp.120-125°C (11,7 Pa) |
| 1.38 | $(CH_3)_3Si$ | H | $CH_3$ | $CH_3$ | H | H | $CH_3$* | $CH_3$* | O | |
| 1.39 | $C_4H_9$(t) | H | H | $CH_3$ | H | H | $CH_3$ | $CH_3$ | O | |
| 1.40 | $C_4H_9$(t) | H | H | $CH_3$ | H | H | H | H | $CH_2$ | |
| 1.41 | $C_4H_9$(t) | H | H | $CH_3$ | H | H | $CH_3$* | $CH_3$* | O | |
| 1.42 | $C_4H_9$(t) | H | H | 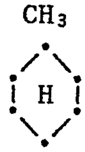 | H | H | H | H | $CH_2$ | |
| 1.43 | $C_4H_9$(t) | H | H | 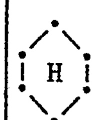 | H | H | $CH_3$ | $CH_3$ | O | |
| 1.44 | $C_4H_9$(t) | H | H | 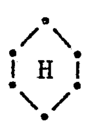 | H | H | $CH_3$* | $CH_3$* | O | |

Fortsetzung Tabelle 1

| Nr. | $R_1$ | $R_2$ | $R_3$ | $R_4$ | $R_5$ | $R_6$ | $R_7$ | $R_8$ | X | Physik. Daten |
|---|---|---|---|---|---|---|---|---|---|---|
| 1.45 | $C_4H_9$(t) | H | $OCH_3$ | 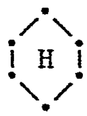 | H | H | $CH_3$ | $CH_3$ | O | |
| 1.46 | $C_4H_9$(t) | H | $OCH_3$ | 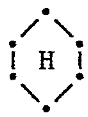 | H | H | $CH_3$* | $CH_3$* | O | |
| 1.47 | $C_4H_9$(t) | H | $OCH_3$ | $OCH_3$ | H | H | $CH_3$ | $CH_3$ | O | |
| 1.48 | $C_4H_9$(t) | H | $OCH_3$ | $OCH_3$ | H | H | $CH_3$* | $CH_3$* | O | |
| 1.49 | $C_4H_9$(t) | H | $OCH_3$ | $OCH_3$ | H | H | H | H | $CH_2$ | |

*CIS-Isomeres

Tabelle 2

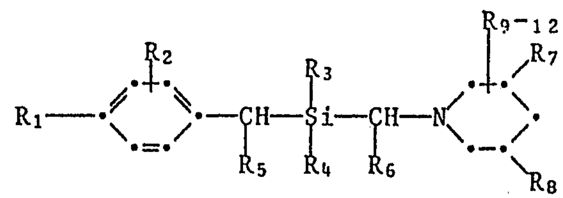

| Nr. | $R_1$ | $R_2$ | $R_3$ | $R_4$ | $R_5$ | $R_6$ | $R_7$ | $R_8$ | $R_9$ | $R_{10}$ | $R_{11}$ | $R_{12}$ | Physik. Daten |
|---|---|---|---|---|---|---|---|---|---|---|---|---|---|
| 2.1 | $C_4H_9$(t) | H | $CH_3$ | $CH_3$ | H | H | H | H | 2-$CH_3$ | 6-$CH_3$ | H | H | Sdp. 110-115°C (2,6 Pa) |
| 2.2 | $C_4H_9$(t) | H | $CH_3$ | $CH_3$ | H | H | H | H | 2-$CH_3$ | 6-$CH_3$ | 2-$CH_3$ | 6-$CH_3$ | |
| 2.3 | $C_4H_9$(t) | H | $CH_3$ | $CH_3$ | H | H | H | 3-$CH_3$ | 3-$CH_3$ | H | H | H | Sdp. 110-114°C (5,0 Pa) |
| 2.4 | $C_4H_9$(t) | H | $CH_3$ | $CH_3$ | H | H | H | 3-$(CH_2)_4$-4 | | H | H | H | Sdp. 145-149°C (5,0 Pa) |
| 2.5 | $C_4H_9$(t) | H | $CH_3$ | $CH_3$ | H | H | H | 3-$(CH)_4$-4* | | H | H | H | Sdp. 175-181°C (2,5 Pa) |
| 2.6 | $C_3H_7$(i) | H | $CH_3$ | $CH_3$ | H | H | H | H | 2-$CH_3$ | 6-$CH_3$ | H | H | |
| 2.7 | $C_3H_7$(i) | H | $CH_3$ | $CH_3$ | H | H | H | H | 2-$CH_3$ | 6-$CH_3$ | 2-$CH_3$ | 6-$CH_3$ | |
| 2.8 | $C_3H_7$(i) | H | $CH_3$ | $CH_3$ | H | H | H | 3-$CH_3$ | 3-$CH_3$ | H | H | H | |
| 2.9 | $C_3H_7$(i) | H | $CH_3$ | $CH_3$ | H | H | H | 3-$(CH_2)_4$-4 | | H | H | H | |
| 2.10 | $C_3H_7$(i) | H | $CH_3$ | $CH_3$ | H | H | H | 3-$(CH)_4$-4* | | H | H | H | |

*$(CH)_4$ = benzo

Fortsetzung Tabelle 2

| Nr. | $R_1$ | $R_2$ | $R_3$ | $R_4$ | $R_5$ | $R_6$ | $R_7$ | $R_8$ | $R_9$ | $R_{10}$ | $R_{11}$ | $R_{12}$ | Physik. Daten |
|---|---|---|---|---|---|---|---|---|---|---|---|---|---|
| 2.11 | $C_4H_9(t)$ | H | H | 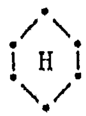 | H | H | H | $3-(CH_2)_4-4$ | | H | H | H | |
| 2.12 | $(CH_3)_3Si$ | H | $CH_3$ | $CH_3$ | H | H | H | H | $2-CH_3$ | $6-CH_3$ | H | H | |
| 2.13 | $(CH_3)_3Si$ | H | $CH_3$ | $CH_3$ | H | H | H | H | $2-CH_3$ | $6-CH_3$ | $2-CH_3$ | $6-CH_3$ | |
| 2.14 | $(CH_3)_3Si$ | H | $CH_3$ | $CH_3$ | H | H | H | $3-CH_3$ | $3-CH_3$ | H | H | H | |
| 2.15 | $(CH_3)_3Si$ | H | $CH_3$ | $CH_3$ | H | H | H | $3-(CH_2)_4-4$ | | H | H | H | Sdp. 143-146°C (2,6 Pa) |
| 2.16 | $(CH_3)_3Si$ | H | $CH_3$ | $CH_3$ | H | H | H | $3-(CH)_4-4$* | | H | H | H | |
| 2.17 | $C_4H_9(t)$ | H | $C_2H_5$ | $C_2H_5$ | H | H | H | $3-(CH)_4-4$* | | H | H | H | |
| 2.18 | $C_4H_9(t)$ | H | $CH_3$ | $CH_3$ | $CH_3$ | H | H | $3-(CH)_4-4$* | | H | H | H | |
| 2.19 | $C_4H_9(t)$ | H | $CH_3$ | $CH_3$ | $CH_3$ | $CH_3$ | H | $3-(CH)_4-4$* | | H | H | H | |
| 2.20 | $C_4H_9(t)$ | H | $C_2H_5$ | $C_2H_5$ | H | H | H | $3-(CH_2)_4-4$ | | H | H | H | |
| 2.21 | $C_4H_9(t)$ | H | $CH_3$ | $CH_3$ | $CH_3$ | H | H | $3-(CH_2)_4-4$ | | H | H | H | |
| 2.22 | $C_4H_9(t)$ | H | $CH_3$ | $CH_3$ | $CH_3$ | $CH_3$ | H | $3-(CH_2)_4-4$ | | H | H | H | |
| 2.23 | $C_4H_9(t)$ | H | $CH_3$ | $CH_3$ | $CH_3$ | H | H | $3-CH_3$ | $3-CH_3$ | H | H | H | |
| 2.24 | $C_4H_9(t)$ | H | $C_2H_5$ | $C_2H_5$ | H | H | H | $3-CH_3$ | $3-CH_3$ | H | H | H | |

*$(CH)_4$ = benzo

Tabelle 3

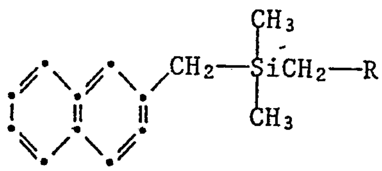

| Verb. Nr. | R | Physik. Daten |
|---|---|---|
| 3.1 | 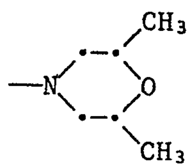 | Sdp. 144-150°C / 2,6 Pa |
| 3.2 | 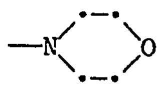 | Sdp. 138-140°C / 1,3 Pa |
| 3.3 | 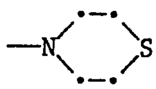 | Sdp. 158-162°C / 2,6 Pa |
| 3.4 | 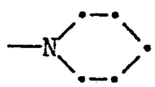 | Sdp. 138-142°C / 1,3 Pa |
| 3.5 | 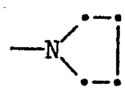 | Sdp. 134-137°C / 2,6 Pa |
| 3.6 | 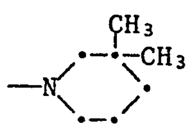 | Sdp. 138-140°C / 2,6 Pa |
| 3.7 | 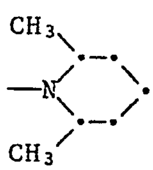 | |
| 3.8 | 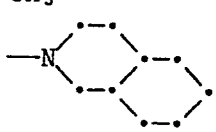 | Sdp. 184-188°C / 7,8 Pa |
| 3.9 | 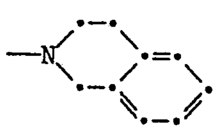 | |
| 3.10 | 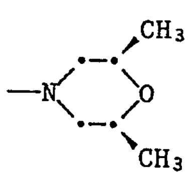 cis | |

## 2. Formulierungsbeispiele für flüssige Wirkstoffe der Formel I (% = Gewichtsprozent)

| 2.1 Emulsions-Konzentrate | a) | b) | c) |
|---|---|---|---|
| Wirkstoff aus den Tabellen 1 - 3 | 25 % | 40 % | 50 % |
| Ca-Dodecylbenzolsulfonat | 5 % | 8 % | 6 % |
| Ricinusöl-polyethylenglykolether (36 Mol Ethylenoxid) | 5 % | - | - |
| Tributylphenoyl-polyethylenglykolether (30 Mol Ethylenoxid) | - | 12 % | 4 % |
| Cyclohexanon | - | 15 % | 20 % |
| Xylolgemisch | 65 % | 25 % | 20 % |

Aus solchen Konzentraten können durch Verdünnen mit Wasser Emulsionen jeder gewünschten Konzentration hergestellt werden.

| 2.2 Lösungen | a) | b) | c) | d) |
|---|---|---|---|---|
| Wirkstoff aus den Tabellen 1 - 3 | 80 % | 10 % | 5 % | 95 % |
| Ethylenglykol-monomethyl-ether | 20 % | - | - | - |
| Polyethylenglykol MG 400 | - | 70 % | - | - |
| N-Methyl-2-pyrrolidon | - | 20 % | - | - |
| Epoxydiertes Kokosnussöl | - | - | 1 % | 5 % |
| Benzin (Siedegrenzen 160-190°C) | - | - | 94 % | - |

(MG = Molekulargewicht)

Die Lösungen sind zur Anwendung in Form kleinster Tropfen geeignet.

| 2.3 Granulate | a) | b) |
|---|---|---|
| Wirkstoff aus den Tabellen 1 - 3 | 5 % | 10 % |
| Kaolin | 94 % | - |
| Hochdisperse Kieselsäure | 1 % | - |
| Attapulgit | - | 90 % |

Der Wirkstoff wird in Methylenchlorid gelöst, auf den Träger aufgesprüht und das Lösungsmittel anschliessend im Vakuum abgedampft.

| 2.4 Stäubemittel | a) | b) |
|---|---|---|
| Wirkstoff aus den Tabellen 1 - 3 | 2 % | 5 % |
| Hochdisperse Kieselsäure | 1 % | 5 % |
| Talkum | 97 % | - |
| Kaolin | - | 90 % |

Durch inniges Vermischen der Trägerstoffe mit dem Wirkstoff erhält man gebrauchsfertige Stäubemittel.

Formulierungsbeispiele für feste Wirkstoffe der Formel I (% = Gewichtsprozent)

| 2.5 Spritzpulver | a) | b) | c) |
|---|---|---|---|
| Wirkstoff aus den Tabellen 1 - 3 | 25 % | 50 % | 75 % |
| Na-Ligninsulfonat | 5 % | 5 % | |
| Na-Laurylsulfat | 3 % | - | 5 % |
| Na-Diisobutylnaphthalinsulfonat | - | 6 % | 10 % |
| Octylphenolpolyethylenglykolether (7-8 Mol Ethylenoxid) | - | 2 % | - |
| Hochdisperse Kieselsäure | 5 % | 10 % | 10 % |
| Kaolin | 62 % | 27 % | - |

Der Wirkstoff wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

2.6 Emulsions-Konzentrat

| | |
|---|---|
| Wirkstoff aus den Tabellen 1 - 3 | 10 % |
| Octylphenolpolyethylenglykolether (4-5 Mol Ethylenoxid) | 3 % |
| Ca-Dodecylbenzolsulfonat | 3 % |
| Ricinusölpolyglykolether (35 Mol Ethylenoxid) | 4 % |
| Cyclohexanon | 30 % |
| Xylolgemisch | 50 % |

Aus diesem Konzentrat können durch Verdünnen mit Wasser Emulsionen jeder gewünschten Konzentration hergestellt werden.

| 2.7 Stäubemittel | a) | b) |
|---|---|---|
| Wirkstoff aus den Tabellen 1 - 3 | 5 % | 8 % |
| Talkum | 95 % | - |
| Kaolin | - | 92 % |

Man erhält anwendungsfertige Stäubemittel, indem der Wirkstoff mit den Träger vermischt und auf einer geeigneten Mühle vermahlen wird.

2.8 Extruder Granulat

| | |
|---|---|
| Wirkstoff aus den Tabellen 1 - 3 | 10 % |
| Na-Ligninsulfonat | 2 % |
| Carboxymethylcellulose | 1 % |
| Kaolin | 87 % |

Der Wirkstoff wird mit den Zusatzstoffen vermischt, vermahlen und mit Wasser angefeuchtet. Dieses Gemisch wird extrudiert und anschliessend im Luftstrom getrocknet.

2.9 Umhüllungs-Granulat

| | |
|---|---|
| Wirkstoff aus den Tabellen 1 - 3 | 3 % |
| Polyethylenglykol (MG 200) | 3 % |
| Kaolin | 94 % |

(MG = Molekulargewicht)

Der fein gemahlene Wirkstoff wird in einem Mischer auf das mit Polyethylenglykol angefeuchtete Kaolin gleichmässig aufgetragen. Auf diese Weise erhält man staubfreie Umhüllungs-Granulate.

2.10 Suspensions-Konzentrat

| | |
|---|---|
| Wirkstoff aus den Tabellen 1 - 3 | 40 % |
| Ethylenglykol | 10 % |
| Nonylphenolpolyethylenglykolether (15 Mol Ethylenoxid) | 6 % |
| N-Ligninsulfonat | 10 % |
| Carboxymethylcellulose | 1 % |
| 37%ige wässrige Formaldehyd-Lösung | 0,2 % |
| Silikonöl in Form einer 75%igen wässrigen Emulsion | 0,8 % |
| Wasser | 32 % |

Der fein gemahlene Wirkstoff wird mit den Zusatzstoffen innig vermischt. Man erhält so ein Suspensions-Konzentrat, aus welchem durch Verdünnen mit Wasser Suspensionen jeder gewünschten Konzentration hergestellt werden können.

## 3. Biologische Beispiele:

### Beispiel 3.1: Wirkung gegen Puccinia graminis auf Weizen

a) Residual-protektive Wirkung

Weizenpflanzen werden 6 Tage nach der Aussaat mit einer aus Spritzpulver des Wirkstoffes hergestellten Spritzbrühe (0,02 % Aktivsubstanz) besprüht. Nach 24 Stunden werden die behandelten Pflanzen mit einer Uredosporensuspension des Pilzes infiziert. Nach einer Inkubation während 48 Stunden bei 95-100 % relativer Luftfeuchtigkeit und ca. 20°C werden die infizierten Pflanzen in einem Gewächshaus bei ca. 22°C aufgestellt. Die Beurteilung der Rostpustelnentwicklung erfolgt 12 Tage nach der Infektion.

b) Systemische Wirkung

Zu Weizenpflanzen wird 5 Tage nach der Aussaat eine aus Spritzpulver des Wirkstoffes hergestellte Spritzbrühe gegossen (0,006 % Aktivsubstanz bezogen auf das Bodenvolumen). Nach 48 Stunden werden die behandelten Pflanzen mit einer Uredosporensuspension des Pilzes infiziert. Nach einer Inkubation während 48 Stunden bei 95-100 % relativer Luftfeuchtigkeit und ca. 20°C werden die infizierten Pflanzen in einem Gewächshaus bei ca. 22°C aufgestellt. Die Beurteilung der Rostpustelnentwicklung erfolgt 12 Tage nach der Infektion.

Verbindungen aus den Tabellen zeigen gegen Puccinia-Pilze gute Wirksamkeit. Unbehandelte aber infizierte Kontrollpflanzen weisen dagegen einen Puccinia-Befall von 100 % auf. So reduzieren z.B. die Verbindungen Nr. 1.1; 1.6; 1.17; 1.28; 2.3; 2.4; 3.3; 3.5 den Puccinia-Befall bis auf einen Rest von unter 20 %.

Beispiel 3.2: Wirkung gegen Cercospora arachidicola auf Erdnusspflanzen

Residual-protektive Wirkung

10-15 cm hohe Erdnusspflanzen werden mit einer aus Spritzpulver der Wirksubstanz hergestellten Spritzbrühe (0,02 % Aktivsubstanz) besprüht und 48 Stunden später mit einer Konidiensuspension des Pilzes infiziert. Die infizierten Pflanzen werden während 72 Stunden bei ca. 21°C und hoher Luftfeuchtigkeit inkubiert und anschliessend bis zum Auftreten der typischen Blattflecken in einem Gewächshaus aufgestellt. Die Beurteilung der fungiziden Wirkung erfolgt 12 Tage nach der Infektion basierend auf Anzahl und Grösse der auftretenden Flecken.

Im Vergleich zu unbehandelten, aber infizierten Kontrollpflanzen (Anzahl und Grösse der Flecken = 100 %), zeigen Erdnusspflanzen, die mit Wirkstoffen aus den Tabellen behandelt werden, einen stark reduzierten Cercospora-Befall. So verhindern z.B. die Verbindungen Nr. 1.1; 1.5; 1.6; 1.16; 1.17; 2.3; 2.4; 2.14; 3.5 im obigen Versuch das Auftreten von Flecken fast vollständig (0-10 %).

Beispiel 3.3: Wirkung gegen Erysiphae graminis auf Gerste

a) Residual-protektive Wirkung

Ca. 8 cm hohe Gerstenpflanzen werden mit einer aus Spritzpulver des Wirkstoffes hergestellten Spritzbrühe (0,02 % Aktivsubstanz) besprüht. Nach 3-4 Stunden werden die behandelten Pflanzen mit Konidien des Pilzes bestäubt. Die infizierten Gerstenpflanzen werden in einem Gewächshaus bei ca. 22°C aufgestellt und der Pilzbefall nach 10 Tagen beurteilt.

b) Systemische Wirkung

Zu ca. 8 cm hohen Gerstenpflanzen wird eine aus Spritzpulver des Wirkstoffes hergestellte Spritzbrühe gegossen (0,006 % Aktivsubstanz bezogen auf das Erdvolumen). Es wurde dabei darauf geachtet, dass die Spritzbrühe nicht mit den oberirdischen Pflanzenteilen in Berührung kam. Nach 48 Stunden werden die behandelten Pflanzen mit Konidien des Pilzes bestäubt. Die infizierten Gerstenpflanzen werden in einem Gewächshaus bei ca. 22°C aufgestellt und der Pilzbefall nach 10 Tagen beurteilt.

Verbindungen aus den Tabellen zeigen gute Wirksamkeit gegen Erysiphe-Pilze. Unbehandelte, aber infizierte Kontrollpflanzen weisen dagegen einen Erysiphe-Befall von 100 % auf. So hemmen z.B. die Verbindungen Nr. 1.1; 1.5; 1.6; 1.15; 1.16; 1.17; 1.28; 1.30; 1.33; 2.1; 2.3; 2.4; 2.5; 2.14; 3.1; 3.5; 3.6; 3.8 den Pilzbefall bei Gerste auf 0 bis 5 %.

Beispiel 3.4: Wirkung gegen Botrytis cinerea an Apfelfrüchten

Künstlich verletzte Aepfel werden behandelt, indem eine aus Spritzpulver der Wirksubstanz hergestellte Spritzbrühe auf die Verletzungsstellen aufgetropft wird. Die behandelten Früchte werden anschliessend mit einer Sporensuspension von Botrytis cinerea inokuliert und während einer Woche bei einer hohen Luftfeuchtigkeit und ca. 20°C inkubiert.

Bei der Auswertung werden die angefaulten Verletzungsstellen gezählt und daraus die fungizide Wirkung der Testsubstanz abgeleitet. Unter anderem hemmt die Verbindung Nr. 1.1; 1.5; 1.16; 1.17; 1.28; 2.4; 2.14; 3.9 den Pilzbefall (0-5 %) im Vergleich zu unbehandelten Kontrollfrüchten fast vollständig.

Beispiel 3.5: Wirkung gegen Pyricularia oryzae auf Reispflanzen

a) Residual-protektive Wirkung

Reispflanzen werden nach zweiwöchiger Anzucht mit einer aus Spritzpulver des Wirkstoffes hergestellten Spritzbrühe (0,05 % Aktivsubstanz) besprüht. Nach 48 Stunden werden die behandelten Pflanzen mit einer Konidiensuspension des Pilzes infiziert. Nach 5 Tagen Inkubation bei 95-100 % relativer Luftfeuchtigkeit und 24°C wird der Pilzbefall beurteilt.

b) Systemische Wirkung

Zu zwei Wochen alten in für Blumen üblichen Tontöpfen wachsenden Reispflanzen wird eine aus Spritzpulver des Wirkstoffes hergestellte Spritzbrühe gegossen (0,006 % Aktivsubstanz bezogen auf das Erdvolumen). Darauf werden die Töpfe mit Wasser soweit gefüllt, dass die untersten Stengelteile der Reispflanzen im Wasser stehen. Nach 48 Stunden werden die behandelten Reispflanzen mit einer Konidiensuspension des Pilzes infiziert. Nach einer Inkubation der infizierten Pflanzen während 5 Tagen bei 95-100 % relativer Luftfeuchtigkeit und ca. 24° wird der Pilzbefall beurteilt.

Verbindungen aus den Tabellen zeigen gute Wirksamkeit gegen den Pyriculariapilz. Unbehandelte, jedoch infizierte Kontrollpflanzen weisen dagegen einen Pyricularia-Befall von 100 % auf. So hemmen z.B. die Verbindungen 1.16; 2.3 den Pilzbefall bis auf 0 bis 5 %.

Beispiel 3.6: Wirkung gegen Rhizoctonia solani (Bodenpilz auf Reispflanzen

a) Protektiv-lokale Bodenapplikation

12 Tage alte Reispflanzen werden mit einer aus einer Formulierung des Wirkstoffes hergestellten Spritzbrühe (0,006 % Aktivsubstanz), ohne oberirdische Pflanzenteile zu kontaminieren, angegossen. Zur Infizierung der behandelten Pflanzen wird eine Suspension von Myzel und Sklerotien von R. solani auf die Bodenoberfläche gegeben. Nach 6-tägiger Inkubation bei 27°C (Tag), bzw. 23°C (Nacht) und 100 % rel. Luftfeuchtigkeit (Feuchtkasten) in der Klimakammer wird der Pilzbefall auf Blattscheide, Blättern und Stengel beurteilt.

b) Protektiv-lokale Blattapplikation

12 Tage alte Reispflanzen werden mit einer aus einer Formulierung der Wirkstoffe hergestellten Spritzbrühe besprüht. Ein Tag später werden die behandelten Pflanzen mit einer Suspension von Myzel und Sklerotien von R. solani infiziert. Nach 6-tägiger Inkubation bei 27°C (Tag), bzw. 23°C (Nacht) und 100 % rel. Luftfeuchtigkeit (Feuchtkasten) in der Klimakammer wird der Pilzbefall auf Blattscheide, Blättern und Stengel beurteilt.

Verbindungen aus den Tabellen zeigen gute Wirksamkeit durch Hemmung des Rhizoctonia-Befalls. Unbehandelte jedoch infizierte Kontrollpflanzen weisen dagegen einen Befall von 100 % auf. So hemmen z.B. die Verbindungen 1.1; 1.15; 1.16; 1.17; 1.28; 1.33; 2.1; 2.3; 2.4; 2.14; 3.1; 3.3 den Pilzbefall bis auf 0 bis 5 %.

Patentansprüche für die Vertragsstaaten: DE, GB, FR, IT, NL, SE, CH, BE, LU, ES, GR, LI

1. Verbindungen der Formel I

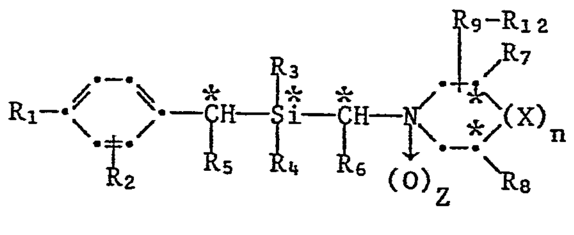

(I)

in welcher

$R_1$ Wasserstoff, $C_1$-$C_{10}$-Alkyl, $C_3$-$C_7$-Cycloalkyl, Phenyl oder Trimethylsilyl und

$R_2$ Wasserstoff oder $C_1$-$C_4$-Alkyl bedeuten oder

$R_1$ und $R_2$ zusammen einen gesättigten oder ungesättigten Ring mit 6 Kohlenstoffatomen bilden;

$R_3$ und $R_4$ unabhängig voneinander Wasserstoff, $C_1$-$C_4$-Alkyl oder $C_1$-$C_4$-Alkoxy und darüber hinaus $R_4$ $C_3$-$C_7$-Cycloalkyl,

$R_5$ - $R_{12}$ unabhängig voneinander Wasserstoff oder $C_1$-$C_4$-Alkyl darstellen, wobei auch

$R_8$ und $R_9$ zusammen einen gesättigten oder ungesättigten Ring mit 6 Kohlenstoffatomen bilden können;

X für $CH_2$, Sauerstoff oder Schwefel steht und

n und Z unabhängig voneinander Null oder 1 bedeuten,

und schliessen für den Fall, dass Z Null bedeutet, ihre Säureadditionssalze mit ein.

2. Verbindungen der Formel I'

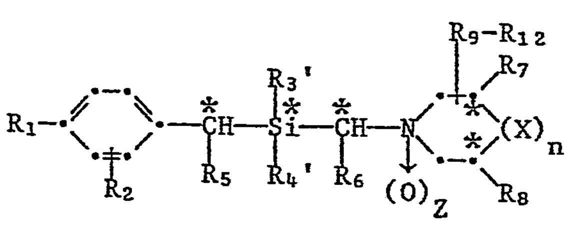

(I')

in welcher
$R_1$ Wasserstoff, $C_1$-$C_{10}$-Alkyl, $C_3$-$C_7$-Cycloalkyl, Phenyl oder Trimethylsilyl und
$R_2$ Wasserstoff oder $C_1$-$C_4$-Alkyl bedeuten oder
$R_1$ und $R_2$ zusammen einen gesättigten oder ungesättigten Ring mit 6 Kohlenstoffatomen bilden;
$R_3$', $R_4$' und $R_5$ - $R_{12}$ unabhängig voneinander Wasserstoff oder $C_1$-$C_4$-Alkyl darstellen, wobei auch
$R_8$ und $R_9$ zusammen einen gesättigten oder ungesättigten Ring mit 6 Kohlenstoffatomen bilden können,
X für $CH_2$, Sauerstoff oder Schwefel steht und
n und Z unabhängig voneinander Null oder 1 bedeuten,
und schliessen für den Fall, dass Z Null bedeutet, ihre Säureadditionssalze mit ein.

3. Verbindungen der Formel I gemäss Anspruch 1, in welchen
$R_1$ $C_1$-$C_4$-Alkyl oder Trimethylsilyl,
$R_2$ Wasserstoff, Methyl oder Ethyl bedeuten, oder
$R_1$ und $R_2$ zusammen einen in 3,4-Stellung ankondensierten Phenylring bilden,
$R_3$ und $R_4$ unabhängig voneinander Wasserstoff, Methyl, Ethyl, Methoxy oder Cyclohexyl,
$R_5$, $R_6$, $R_7$ und $R_8$ unabhängig voneinander Wasserstoff, Methyl oder Ethyl,
$R_9$-$R_{12}$ Wasserstoff darstellen, oder
$R_8$ und $R_9$ zusammen in 3,4-Stellung einen ankondensierten Hexan- oder Phenylring bilden,
X für $CH_2$, Sauerstoff oder Schwefel steht,
n 1 oder Null bedeutet, und
Z Null ist.

4. Verbindungen der Formel I' gemäss Anspruch 2, in welchen
$R_1$ $C_1$-$C_4$-Alkyl oder Trimethylsilyl,
$R_2$ Wasserstoff, Methyl oder Ethyl bedeuten, oder
$R_1$ und $R_2$ zusammen einen in 3,4-Stellung ankondensierten Phenylring bilden,
$R_3'$ und $R_4'$ unabhängig voneinander Methyl oder Ethyl,
$R_5$, $R_6$, $R_7$ und $R_8$ unabhängig voneinander Wasserstoff, Methyl oder Ethyl,
$R_9$-$R_{12}$ Wasserstoff darstellen, oder
$R_8$ und $R_9$ zusammen in 3,4-Stellung einen ankondensierten Hexan- oder Phenylring bilden,
X für $CH_2$, Sauerstoff oder Schwefel steht,
n 1 oder Null bedeutet, und
Z Null ist.

5. Verbindungen der Formel I' gemäss Anspruch 4, in welchen
$R_1$ iso-Propyl, tert. Butyl oder Trimethylsilyl,
$R_2$ Wasserstoff bedeuten, oder
$R_1$ und $R_2$ zusammen einen in 3,4-Stellung ankondensierten Phenylring bilden,
$R_3'$ und $R_4'$ Methyl,
$R_5$, $R_6$ und $R_9$-$R_{12}$ Wasserstoff,
$R_7$ und $R_8$ unabhängig voneinander Wasserstoff oder Methyl, oder
$R_8$ und $R_9$ zusammen in 3,4-Stellung einen ankondensierten Hexan- oder Phenylring bilden,
X für $CH_2$, Sauerstoff oder Schwefel steht,
n 1 oder Null bedeutet und
Z Null ist.

6. Verbindungen der Formel I' gemäss Anspruch 5, in welchen
$R_1$ iso-Propyl, tert. Butyl oder Trimethylsilyl,
$R_2$ Wasserstoff bedeuten, oder
$R_1$ und $R_2$ zusammen einen in 3,4-Stellung ankondensierten Phenylring bilden,
$R_3'$ und $R_4'$ Methyl,

$R_5$, $R_6$ und $R_9$-$R_{12}$ Wasserstoff,
$R_7$ und $R_8$ unabhängig voneinander Wasserstoff oder Methyl, oder
$R_8$ und $R_9$ zusammen in 3,4-Stellung einen ankondensierten Hexan- oder Phenylring bilden,
X für $CH_2$, Sauerstoff oder Schwefel steht,
n 1 bedeutet, und
Z Null ist.

7. Eine Verbindung der Formel I' gemäss Anspruch 2 aus der Gruppe
Dimethyl-4-tert.butylbenzyl-2,6-dimethylmorpholin-(4)ylmethyl-silan;
Dimethyl-4-tert.butylbenzyl-morpholin-(4)ylmethyl-silan;
Dimethyl-4-tert.butylbenzyl-N-piperidinylmethylsilan;
Dimethyl-4-trimethylsilylbenzyl-N-piperidinylmethyl-silan;
Dimethyl-4-trimethylsilylbenzyl-morpholin-(4)ylmethyl-silan;
Dimethyl-4-trimethylsilylbenzyl-2,6-dimethylmorpholin-(4)ylmethyl-silan;
Dimethyl-4-tert.butylbenzyl-tetrahydro-1,4-thiazin-(4)ylmethylsilan;
Dimethyl-4-isopropylbenzyl-tetrahydro-1,4-thiazin-(4)ylmethyl-silan;
Dimethyl-4-tert.butylbenzyl-N-pyrrolidinylmethyl-silan;
Dimethyl-4-trimethylsilylbenzyl-tetrahydro-1,4-thiazin-(4)ylmethyl-silan;
Dimethyl-4-tert.butylbenzyl-cyclohexa[c]N-piperidinylmethyl-silan;
Dimethyl-4-tert.butylbenzyl-benzo[c]N-piperidinylmethyl-silan;
Dimethyl-4-trimethylsilylbenzyl-cyclohexa[c]N-piperidinylmethyl-silan;
Dimethyl-naphthyl-(2)ylmethyl-2,6-dimethylmorpholin-(4)ylmethyl-silan;
Dimethyl-naphthyl-(2)ylmethyl-cyclohexa[c]piperidin-(1)ylmethyl-silan.

8. Verbindung der Formel I' gemäss Anspruch 2:
cis-Dimethyl-4-tert.butylbenzyl-2,6-dimethylmorpholin-4-ylmethyl-silan.

9. Verbindungen der Formel I gemäss Anspruch 1:
cis-Cyclohexyl-4-tert.butylbenzyl-2,6-dimethylmorpholin-4-ylmethyl-silan;
cis-Methoxy-cyclohexyl-(4-tert.butylbenzyl)-2,6-dimethylmorpholin-4)yl-silan.

10. Verfahren zur Herstellung der Verbindungen der Formel I in Anspruch 1, dadurch gekennzeichnet, dass man
a) eine Verbindung der Formel II

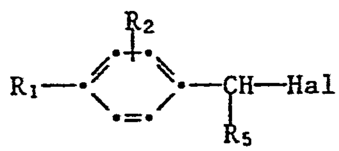 (II),

mit einem Erdalkalimetall, vorzugsweise Magnesium, reagieren lässt und die so erhaltene Organometall-Verbindung der Formel III

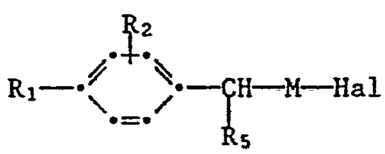 (III),

b) mit einer Halogensilanverbindung der Formel IV

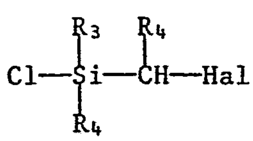 (IV)

umsetzt und die so erhaltene Verbindung V

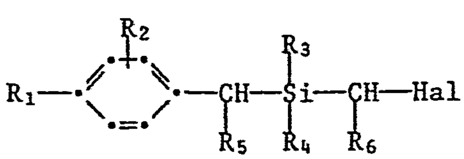 (V)

c) mit einem heterocyclischen Amin der Formel VI

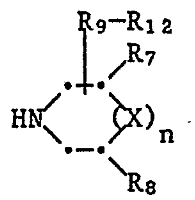

(VI),

gegebenenfalls in Gegenwart einer Hilfsbase, zu einer Verbindung der Formel Ia

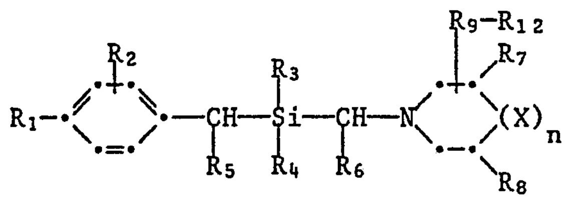

(Ia),

umsetzt und diese Verbindung, falls gewünscht,

d) mit einem Oxidationsmittel, wie z.B. $H_2O_2$ oder Persäuren, in die Verbindung Ib

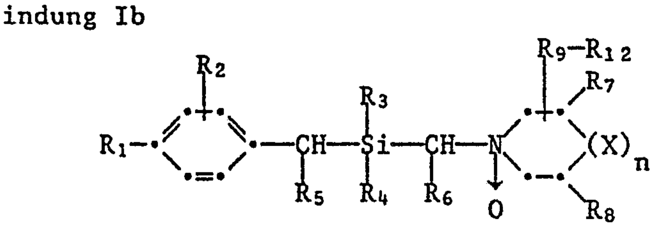

(Ib),

überführt,
worin die Reste $R_1$-$R_{12}$ sowie die Symbole n und Z die unter Formel I in Anspruch 1 angegebenen Bedeutungen haben, M für ein Erdalkalimetallatom steht und Hal Halogen bedeutet.

11. Verfahren zur Herstellung der Verbindungen der Formel I in Anspruch 1, dadurch gekennzeichnet, dass man eine Organometall-Verbindung der Formel VII

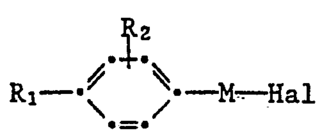

(VII)

mit einer Si-organischen Verbindung der Formel VIII

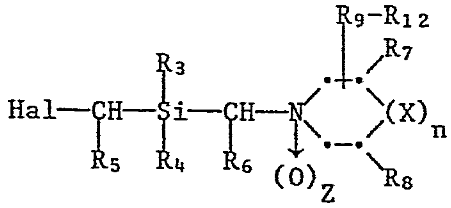

(VIII),

umsetzt, worin die Reste $R_1$-$R_{12}$ sowie die Symbole n und Z die unter Formel I in Anspruch 1 angegebenen Bedeutungen haben, M für ein Erdalkalimetallatom steht und Hal Halogen bedeutet.

12. Mikrobizides Mittel zur Bekämpfung oder Verhütung eines Befalls durch Mikroorganismen, dadurch gekennzeichnet, dass es als aktive Komponente mindestens eine Verbindung der Formel I gemäss Anspruch 1 enthält.

13. Mittel gemäss Anspruch 12, dadurch gekennzeichnet, dass es als aktive Komponente mindestens eine Verbindung der Formel I' gemäss Anspruch 2 enthält.

14. Mittel gemäss Anspruch 12, dadurch gekennzeichnet, dass es als aktive Komponente mindestens eine Verbindung der Formel I gemäss Anspruch 3 enthält.

15. Mittel gemäss Anspruch 13, dadurch gekennzeichnet, dass es als aktive Komponente mindestens eine Verbindung der Formel I' gemäss den Ansprüchen 4-6 enthält.

16. Mittel gemäss Anspruch 13, dadurch gekennzeichnet, dass es als aktive Komponente mindestens eine Verbindung der Formel I' gemäss den Ansprüchen 7-9 enthält.

17. Mittel nach einem der Ansprüche 12 bis 16, dadurch gekennzeichnet, dass es 0,1 bis 99 Gew.-% eines Wirkstoffs der Formel I oder I', 99,9 bis 1 Gew.-% eines festen oder flüssigen Zusatzstoffes und 0 bis 25 Gew.-% eines Tensides enthält.

18. Mittel nach Anspruch 17, dadurch gekennzeichnet, dass es 0,1 bis 95 Gew.-% eines Wirkstoffes der Formel I oder I', 99,8 bis 5 Gew.-% eines festen oder flüssigen Zusatzstoffes und 0,1 bis 25 Gew.-% eines Tensides enthält.

19. Verfahren zur Herstellung eines agrochemischen Mittels, dadurch gekennzeichnet, dass man mindestens eine Verbindung der Formel I oder I' gemäss einem der Ansprüche 12 bis 18 mit geeigneten festen oder flüssigen Zusatzstoffen und Tensiden innig vermischt.

20. Verfahren zur Bekämpfung oder Verhütung eines Befalles von Kulturpflanzen durch phytopathogene Mikroorganismen, dadurch gekennzeichnet, dass man eine Verbindung der Formel I oder I' gemäss einem der Ansprüche 1 bis 9 auf die Pflanze oder deren Standort appliziert.

21. Verwendung von Verbindungen der Formel I oder I' gemäss Anspruch 1 oder 2 zur Bekämpfung und/oder zur präventiven Verhütung eines Befalls von Mikroorganismen.

22. Verwendung nach Anspruch 21 von Verbindungen der Formel I oder I' gemäss einem der Ansprüche 3-9.

23. Verwendung gemäss Anspruch 22, dadurch gekennzeichnet, dass es sich bei den Mikroorganismen um phytopathogene Pilze handelt.

24. Verwendung gemäss Anspruch 23 gegen Pilze aus den Klassen Ascomycetes, Basidiomycetes oder Fungi imperfecti.

FO 7.5/HGT/cc*

Patentansprüche für den Vertragsstaat AT

1. Mikrobizides Mittel zur Bekämpfung oder Verhütung eines Befalls durch Mikroorganismen, dadurch gekennzeichnet, dass es als aktive Komponente mindestens eine Verbindung der Formel I

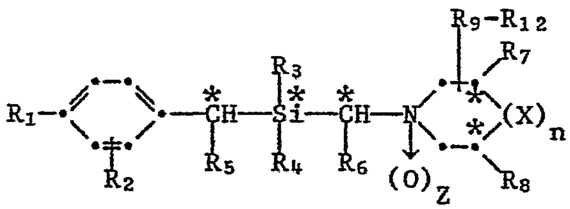

(I)

in welcher

$R_1$ Wasserstoff, $C_1$-$C_{10}$-Alkyl, $C_3$-$C_7$-Cycloalkyl, Phenyl oder Trimethylsilyl und

$R_2$ Wasserstoff oder $C_1$-$C_4$-Alkyl bedeuten oder

$R_1$ und $R_2$ zusammen einen gesättigten oder ungesättigten Ring mit 6 Kohlenstoffatomen bilden;

$R_3$ und $R_4$ unabhängig voneinander Wasserstoff, $C_1$-$C_4$-Alkyl oder $C_1$-$C_4$-Alkoxy und darüber hinaus $R_4$ $C_3$-$C_7$-Cycloalkyl,

$R_5$ - $R_{12}$ unabhängig voneinander Wasserstoff oder $C_1$-$C_4$-Alkyl darstellen, wobei auch

$R_8$ und $R_9$ zusammen einen gesättigten oder ungesättigten Ring mit 6 Kohlenstoffatomen bilden können;

X für $CH_2$, Sauerstoff oder Schwefel steht und

n und Z unabhängig voneinander Null oder 1 bedeuten,

und schliessen für den Fall, dass Z Null bedeutet, ihre Säureadditionssalze mit ein.

2. Mikrobizides Mittel zur Bekämpfung oder Verhütung eines Befalls durch Mikroorganismen, dadurch gekennzeichnet, dass es als aktive Komponente mindestens eine Verbindung der Formel I'

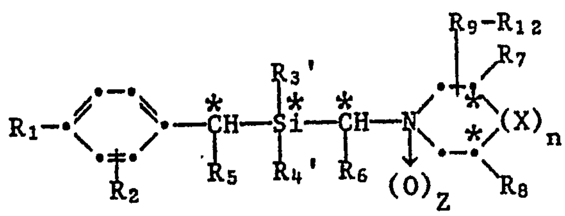

(I')

in welcher

$R_1$ Wasserstoff, $C_1$-$C_{10}$-Alkyl, $C_3$-$C_7$-Cycloalkyl, Phenyl oder Trimethylsilyl und

$R_2$ Wasserstoff oder $C_1$-$C_4$-Alkyl bedeuten oder

$R_1$ und $R_2$ zusammen einen gesättigten oder ungesättigten Ring mit 6 Kohlenstoffatomen bilden;

$R_3'$, $R_4'$ und $R_5$ - $R_{12}$ unabhängig voneinander Wasserstoff oder $C_1$-$C_4$-Alkyl darstellen, wobei auch

$R_8$ und $R_9$ zusammen einen gesättigten oder ungesättigten Ring mit 6 Kohlenstoffatomen bilden können,

X für $CH_2$, Sauerstoff oder Schwefel steht und

n und Z unabhängig voneinander Null oder 1 bedeuten,

und schliessen für den Fall, dass Z Null bedeutet, ihre Säureadditionssalze mit ein.

3. Mittel gemäss Anspruch 1, dadurch gekennzeichnet, dass es als aktive Komponente Verbindungen der Formel I, in welchen

$R_1$ $C_1$-$C_4$-Alkyl oder Trimethylsilyl,

$R_2$ Wasserstoff, Methyl oder Ethyl bedeuten, oder

$R_1$ und $R_2$ zusammen einen in 3,4-Stellung ankondensierten Phenylring bilden,

$R_3$ und $R_4$ unabhängig voneinander Wasserstoff, Methyl, Ethyl, Methoxy oder Cyclohexyl,

$R_5$, $R_6$, $R_7$ und $R_8$ unabhängig voneinander Wasserstoff, Methyl oder Ethyl,

$R_9$-$R_{12}$ Wasserstoff darstellen, oder

$R_8$ und $R_9$ zusammen in 3,4-Stellung einen ankondensierten Hexan- oder Phenylring bilden,

X für $CH_2$, Sauerstoff oder Schwefel steht,

n 1 oder Null bedeutet, und

Z Null ist, enthält.

4. Mittel gemäss Anspruch 2, dadurch gekennzeichnet, dass es als aktive Komponente Verbindungen der Formel I', in welchen

$R_1$ $C_1$-$C_4$-Alkyl oder Trimethylsilyl,

$R_2$ Wasserstoff, Methyl oder Ethyl bedeuten, oder

$R_1$ und $R_2$ zusammen einen in 3,4-Stellung ankondensierten Phenylring bilden,

$R_3'$ und $R_4'$ unabhängig voneinander Methyl oder Ethyl,

$R_5$, $R_6$, $R_7$ und $R_8$ unabhängig voneinander Wasserstoff, Methyl oder Ethyl,

$R_9$-$R_{12}$ Wasserstoff darstellen, oder

$R_8$ und $R_9$ zusammen in 3,4-Stellung einen ankondensierten Hexan- oder Phenylring bilden,

X für $CH_2$, Sauerstoff oder Schwefel steht,

n 1 oder Null bedeutet, und

Z Null ist, enthält.

5. Mittel gemäss Anspruch 2, dadurch gekennzeichnet, dass es als aktive Komponente Verbindungen der Formel I', in welchen

$R_1$ iso-Propyl, tert. Butyl oder Trimethylsilyl,

$R_2$ Wasserstoff bedeuten, oder

$R_1$ und $R_2$ zusammen einen in 3,4-Stellung ankondensierten Phenylring bilden,

$R_3'$ und $R_4'$ Methyl,

$R_5$, $R_6$ und $R_9$-$R_{12}$ Wasserstoff,

$R_7$ und $R_8$ unabhängig voneinander Wasserstoff oder Methyl, oder

$R_8$ und $R_9$ zusammen in 3,4-Stellung einen ankondensierten Hexan- oder Phenylring bilden,

X für $CH_2$, Sauerstoff oder Schwefel steht,

n 1 oder Null bedeutet und

Z Null ist, enthält.

6. Mittel gemäss Anspruch 2, dadurch gekennzeichnet, dass es als aktive Komponente Verbindungen der Formel I', in welchen
$R_1$ iso-Propyl, tert. Butyl oder Trimethylsilyl,
$R_2$ Wasserstoff bedeuten, oder
$R_1$ und $R_2$ zusammen einen in 3,4-Stellung ankondensierten Phenylring bilden,
$R_3$' und $R_4$' Methyl,
$R_5$, $R_6$ und $R_9$-$R_{12}$ Wasserstoff,
$R_7$ und $R_8$ unabhängig voneinander Wasserstoff oder Methyl, oder
$R_8$ und $R_9$ zusammen in 3,4-Stellung einen ankondensierten Hexan- oder Phenylring bilden,
X für $CH_2$, Sauerstoff oder Schwefel steht,
n 1 bedeutet, und
Z Null ist, enthält.

7. Mittel gemäss Anspruch 2, dadurch gekennzeichnet, dass es als aktive Komponente eine Verbindung der Formel I' aus der Gruppe
Dimethyl-4-tert.butylbenzyl-2,6-dimethylmorpholin-(4)ylmethyl-silan;
Dimethyl-4-tert.butylbenzyl-morpholin-(4)ylmethyl-silan;
Dimethyl-4-tert.butylbenzyl-N-piperidinylmethylsilan;
Dimethyl-4-trimethylsilylbenzyl-N-piperidinylmethyl-silan;
Dimethyl-4-trimethylsilylbenzyl-morpholin-(4)ylmethyl-silan;
Dimethyl-4-trimethylsilylbenzyl-2,6-dimethylmorpholin-(4)ylmethyl-silan;
Dimethyl-4-tert.butylbenzyl-tetrahydro-1,4-thiazin-(4)ylmethylsilan;
Dimethyl-4-isopropylbenzyl-tetrahydro-1,4-thiazin-(4)ylmethyl-silan;
Dimethyl-4-tert.butylbenzyl-N-pyrrolidinylmethyl-silan;
Dimethyl-4-trimethylsilylbenzyl-tetrahydro-1,4-thiazin-(4)ylmethyl-silan;
Dimethyl-4-tert.butylbenzyl-cyclohexa[c]N-piperidinylmethyl-silan;
Dimethyl-4-tert.butylbenzyl-benzo[c]N-piperidinylmethyl-silan;
Dimethyl-4-trimethylsilylbenzyl-cyclohexa[c]N-piperidinylmethyl-silan;

Dimethyl-naphthyl-(2)ylmethyl-2,6-dimethylmorpholin-(4)ylmethyl-silan;
Dimethyl-naphthyl-(2)ylmethyl-cyclohexa[c]piperidin-(1)ylmethyl-silan enthält.

8. Mittel gemäss Anspruch 2, dadurch gekennzeichnet, dass es als aktive Komponente die Verbindung der Formel I'
cis-Dimethyl-4-tert.butylbenzyl-2,6-dimethylmorpholin-4-ylmethyl-silan enthält.

9. Mittel gemäss Anspruch 1, dadurch gekennzeichnet, dass es als aktive Komponente die Verbindungen der Formel I
cis-Cyclohexyl-4-tert.butylbenzyl-2,6-dimethylmorpholin-4-ylmethyl-silan;
cis-Methoxy-cyclohexyl-(4-tert.butylbenzyl)-2,6-dimethylmorpholin-4)yl-silan enthält.

10. Mittel nach einem der Ansprüche 1 bis 9, dadurch gekennzeichnet, dass es 0,1 bis 99 Gew.-% eines Wirkstoffs der Formel I oder I', 99,9 bis 1 Gew.-% eines festen oder flüssigen Zusatzstoffes und 0 bis 25 Gew.-% eines Tensides enthält.

11. Mittel nach Anspruch 10, dadurch gekennzeichnet, dass es 0,1 bis 95 Gew.-% eines Wirkstoffes der Formel I oder I', 99,8 bis 5 Gew.-% eines festen oder flüssigen Zusatzstoffes und 0,1 bis 25 Gew.-% eines Tensides enthält.

12. Verfahren zur Herstellung der Verbindungen der Formel I

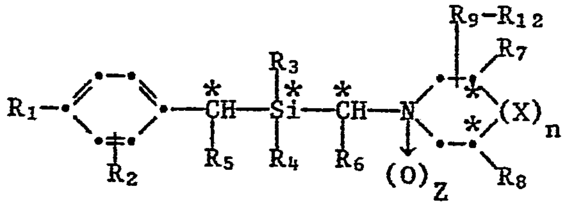

(I)

in welcher

$R_1$ Wasserstoff, $C_1$-$C_{10}$-Alkyl, $C_3$-$C_7$-Cycloalkyl, Phenyl oder Trimethylsilyl und

$R_2$ Wasserstoff oder $C_1$-$C_4$-Alkyl bedeuten oder

$R_1$ und $R_2$ zusammen einen gesättigten oder ungesättigten Ring mit 6 Kohlenstoffatomen bilden;

$R_3$ und $R_4$ unabhängig voneinander Wasserstoff, $C_1$-$C_4$-Alkyl oder $C_1$-$C_4$-Alkoxy und darüber hinaus $R_4$ $C_3$-$C_7$-Cycloalkyl,

$R_5$ - $R_{12}$ unabhängig voneinander Wasserstoff oder $C_1$-$C_4$-Alkyl darstellen, wobei auch

$R_8$ und $R_9$ zusammen einen gesättigten oder ungesättigten Ring mit 6 Kohlenstoffatomen bilden können;

X für $CH_2$, Sauerstoff oder Schwefel steht und

n und Z unabhängig voneinander Null oder 1 bedeuten,

und schliessen für den Fall, dass Z Null bedeutet, ihre Säureadditionssalze mit ein, dadurch gekennzeichnet, dass man

a) eine Verbindung der Formel II

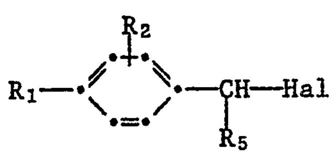

(II),

mit einem Erdalkalimetall, vorzugsweise Magnesium, reagieren lässt und die so erhaltene Organometall-Verbindung der Formel III

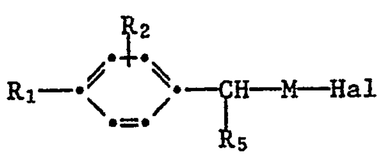

(III),

b) mit einer Halogensilanverbindung der Formel IV

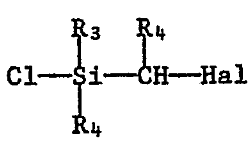

(IV)

umsetzt und die so erhaltene Verbindung V

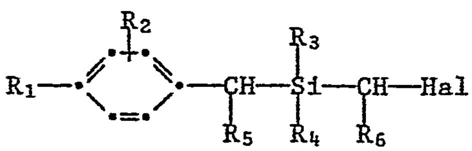 (V)

c) mit einem heterocyclischen Amin der Formel VI

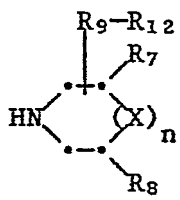 (VI),

gegebenenfalls in Gegenwart einer Hilfsbase, zu einer Verbindung der Formel Ia

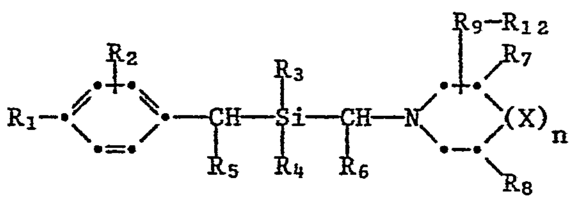 (Ia),

umsetzt und diese Verbindung, falls gewünscht,

d) mit einem Oxidationsmittel, wie z.B. $H_2O_2$ oder Persäuren, in die Verbindung Ib

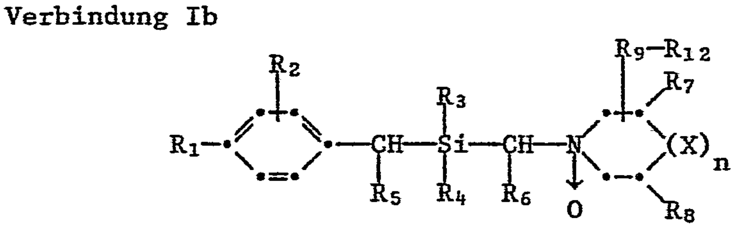 (Ib),

überführt,
worin die Reste $R_1$-$R_{12}$ sowie die Symbole n und Z die unter Formel I angegebenen Bedeutungen haben, M für ein Erdalkalimetallatom steht und Hal Halogen bedeutet.

13. Verfahren zur Herstellung der Verbindungen der Formel I in Anspruch 12, dadurch gekennzeichnet, dass man eine Organometall-Verbindung der Formel VII

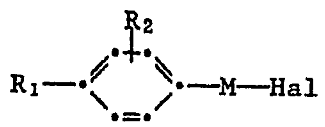
(VII)

mit einer Si-organischen Verbindung der Formel VIII

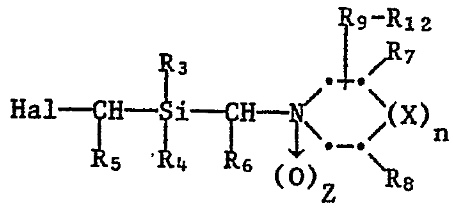
(VIII),

umsetzt, worin die Reste $R_1$-$R_{12}$ sowie die Symbole n und Z die unter Formel I in Anspruch 12 angegebenen Bedeutungen haben, M für ein Erdalkalimetallatom steht und Hal Halogen bedeutet.

14. Verfahren zur Herstellung gemäss der Ansprüche 12 und 13 der Verbindungen der Formel I'

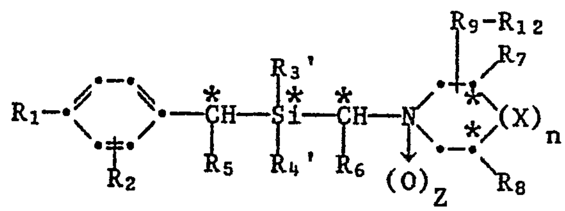
(I')

in welcher

$R_1$ Wasserstoff, $C_1$-$C_{10}$-Alkyl, $C_3$-$C_7$-Cycloalkyl, Phenyl oder Trimethylsilyl und

$R_2$ Wasserstoff oder $C_1$-$C_4$-Alkyl bedeuten oder

$R_1$ und $R_2$ zusammen einen gesättigten oder ungesättigten Ring mit 6 Kohlenstoffatomen bilden;

$R_3'$, $R_4'$ und $R_5$ - $R_{12}$ unabhängig voneinander Wasserstoff oder $C_1$-$C_4$-Alkyl darstellen, wobei auch

$R_8$ und $R_9$ zusammen einen gesättigten oder ungesättigten Ring mit 6 Kohlenstoffatomen bilden können,

X für $CH_2$, Sauerstoff oder Schwefel steht und

n und Z unabhängig voneinander Null oder 1 bedeuten,

und schliessen für den Fall, dass Z Null bedeutet, ihre Säureadditionssalze mit ein.

15. Verfahren zur Herstellung gemäss der Ansprüche 12 und 13 der Verbindungen der Formel I, in welchen
$R_1$ $C_1$-$C_4$-Alkyl oder Trimethylsilyl,
$R_2$ Wasserstoff, Methyl oder Ethyl bedeuten, oder
$R_1$ und $R_2$ zusammen einen in 3,4-Stellung ankondensierten Phenylring bilden,
$R_3$ und $R_4$ unabhängig voneinander Wasserstoff, Methyl, Ethyl, Methoxy oder Cyclohexyl,
$R_5$, $R_6$, $R_7$ und $R_8$ unabhängig voneinander Wasserstoff, Methyl oder Ethyl,
$R_9$-$R_{12}$ Wasserstoff darstellen, oder
$R_8$ und $R_9$ zusammen in 3,4-Stellung einen ankondensierten Hexan- oder Phenylring bilden,
X für $CH_2$, Sauerstoff oder Schwefel steht,
n 1 oder Null bedeutet, und
Z Null ist.

16. Verfahren zur Herstellung gemäss der Ansprüche 12 und 13 der Verbindungen der Formel I' in Anspruch 14, in welchen
$R_1$ $C_1$-$C_4$-Alkyl oder Trimethylsilyl,
$R_2$ Wasserstoff, Methyl oder Ethyl bedeuten, oder
$R_1$ und $R_2$ zusammen einen in 3,4-Stellung ankondensierten Phenylring bilden,
$R_3'$ und $R_4'$ unabhängig voneinander Methyl oder Ethyl,
$R_5$, $R_6$, $R_7$ und $R_8$ unabhängig voneinander Wasserstoff, Methyl oder Ethyl,
$R_9$-$R_{12}$ Wasserstoff darstellen, oder
$R_8$ und $R_9$ zusammen in 3,4-Stellung einen ankondensierten Hexan- oder Phenylring bilden,
X für $CH_2$, Sauerstoff oder Schwefel steht,
n 1 oder Null bedeutet, und
Z Null ist.

17. Verfahren zur Herstellung gemäss der Ansprüche 12 und 13 der Verbindungen der Formel I' in Anspruch 14, in welchen
$R_1$ iso-Propyl, tert. Butyl oder Trimethylsilyl,
$R_2$ Wasserstoff bedeuten, oder
$R_1$ und $R_2$ zusammen einen in 3,4-Stellung ankondensierten Phenylring bilden,
$R_3$' und $R_4$' Methyl,
$R_5$, $R_6$ und $R_9$-$R_{12}$ Wasserstoff,
$R_7$ und $R_8$ unabhängig voneinander Wasserstoff oder Methyl, oder
$R_8$ und $R_9$ zusammen in 3,4-Stellung einen ankondensierten Hexan- oder Phenylring bilden,
X für $CH_2$, Sauerstoff oder Schwefel steht,
n 1 oder Null bedeutet und
Z Null ist.

18. Verfahren zur Herstellung gemäss der Ansprüche 12 und 13 der Verbindungen der Formel I' in Anspruch 14, in welchen
$R_1$ iso-Propyl, tert. Butyl oder Trimethylsilyl,
$R_2$ Wasserstoff bedeuten, oder
$R_1$ und $R_2$ zusammen einen in 3,4-Stellung ankondensierten Phenylring bilden,
$R_3$' und $R_4$' Methyl,
$R_5$, $R_6$ und $R_9$-$R_{12}$ Wasserstoff,
$R_7$ und $R_8$ unabhängig voneinander Wasserstoff oder Methyl, oder
$R_8$ und $R_9$ zusammen in 3,4-Stellung einen ankondensierten Hexan- oder Phenylring bilden,
X für $CH_2$, Sauerstoff oder Schwefel steht,
n 1 bedeutet, und
Z Null ist.

19. Verfahren zur Herstellung gemäss der Ansprüche 12 und 13 einer Verbindung aus der Gruppe
Dimethyl-4-tert.butylbenzyl-2,6-dimethylmorpholin-(4)ylmethyl-silan;
Dimethyl-4-tert.butylbenzyl-morpholin-(4)ylmethyl-silan;
Dimethyl-4-tert.butylbenzyl-N-piperidinylmethylsilan;
Dimethyl-4-trimethylsilylbenzyl-N-piperidinylmethyl-silan;

Dimethyl-4-trimethylsilylbenzyl-morpholin-(4)ylmethyl-silan;
Dimethyl-4-trimethylsilylbenzyl-2,6-dimethylmorpholin-(4)ylmethyl-silan;
Dimethyl-4-tert.butylbenzyl-tetrahydro-1,4-thiazin-(4)ylmethylsilan;
Dimethyl-4-isopropylbenzyl-tetrahydro-1,4-thiazin-(4)ylmethyl-silan;
Dimethyl-4-tert.butylbenzyl-N-pyrrolidinylmethyl-silan;
Dimethyl-4-trimethylsilylbenzyl-tetrahydro-1,4-thiazin-(4)ylmethyl-silan;
Dimethyl-4-tert.butylbenzyl-cyclohexa[c]N-piperidinylmethyl-silan;
Dimethyl-4-tert.butylbenzyl-benzo[c]N-piperidinylmethyl-silan;
Dimethyl-4-trimethylsilylbenzyl-cyclohexa[c]N-piperidinylmethyl-silan;
Dimethyl-naphthyl-(2)ylmethyl-2,6-dimethylmorpholin-(4)ylmethyl-silan;
Dimethyl-naphthyl-(2)ylmethyl-cyclohexa[c]piperidin-(1)ylmethyl-silan.

20. Verfahren zur Herstellung gemäss der Ansprüche 12 und 13 der Verbindung:
cis-Dimethyl-4-tert.butylbenzyl-2,6-dimethylmorpholin-4-ylmethyl-silan.

21. Verfahren zur Herstellung gemäss der Ansprüche 12 und 13 der Verbindungen:
cis-Cyclohexyl-4-tert.butylbenzyl-2,6-dimethylmorpholin-4-ylmethyl-silan;
cis-Methoxy-cyclohexyl-(4-tert.butylbenzyl)-2,6-dimethylmorpholin-4)yl-silan.

22. Verfahren zur Herstellung eines mikrobiziden Mittels, dadurch gekennzeichnet, dass das Mittel 0,1 bis 99 Gew.-% eines Wirkstoffs der Formel I oder I' aus den Ansprüchen 12 und 14, 99,9 bis 1 Gew.-% eines festen oder flüssigen Zusatzstoffes und 0 bis 25 Gew.-% eines Tensides enthält.

23. Verfahren gemäss Anspruch 22 zur Herstellung eines mikrobiziden Mittels, dadurch gekennzeichnet, dass es 0,1 bis 95 Gew.-% eines Wirkstoffes der Formel I oder I', 99,8 bis 5 Gew.-% eines festen oder flüssigen Zusatzstoffes und 0,1 bis 25 Gew.-% eines Tensides enthält.

24. Verfahren zur Bekämpfung oder Verhütung eines Befalles von Kulturpflanzen durch phytopathogene Mikroorganismen, dadurch gekennzeichnet, dass man eine Verbindung der Formel I oder I' gemäss einem der Ansprüche 1 bis 11 auf die Pflanze oder deren Standort appliziert.

25. Verwendung von Verbindungen der Formel I oder I' gemäss einem der Ansprüche 1 bis 11 zur Bekämpfung und/oder präventiven Verhütung des Befalls von Pflanzen durch Mikroorganismen.

FO 7.5 HGT/sm*